# EUROPEAN PATENT APPLICATION

(11) **EP 3 091 722 A1**
(43) Date of publication of application: **09.11.2016**
(21) Application number: 15745838.1
(22) Date of filing: 20.01.2015
(51) Int. Cl.: H04M 11/00, H04M 1/00, H04W 8/24, H04W 84/10, H04W 92/08

(54) **ELECTRONIC DEVICE MANAGEMENT SYSTEM, ELECTRONIC DEVICE MANAGEMENT SERVER, AND ELECTRONIC DEVICE MANAGEMENT METHOD**

(30) Priority: 04.02.2014 JP 2014019779; 07.03.2014 JP 2014045367
(71) Applicant: Aplix IP Holdings Corporation, Tokyo 169-0051 (JP)
(72) Inventor: KORIYAMA, Ryu, Tokyo 169-0051 (JP); ADACHI, Eiji, Tokyo 169-0059 (JP); SHIRAKAWA, Takahiro, Tokyo 169-0051 (JP)
(74) Representative: Cohausz & Florack
(86) International application number: PCT/JP2015/051357
(87) International publication number: WO 2015/118938

(57) **Abstract**

An electronic device transmits a radio signal. A communication terminal, upon having received the radio signal, transmits, to a server, condition information indicating a condition of the electronic device and identifying information of the electronic device, included in the radio signal. The server, upon having received the identifying information of the electronic device from the communication terminal, transmits, to the communication terminal, necessary information for processing in the communication terminal depending on the received identifying information. Then, the communication terminal processes the information received from the server. Moreover, the server manages the condition information received from the communication terminal.

## Description

### Technical Field

The present invention relates to an electronic device management system including an electronic device, a communication terminal capable of receiving a radio signal, and a server capable of communicating with the communication terminal, an electronic device management server, and an electronic device management method.

### Background Art

Recently, there is an increasing demand for a service of distributing information, such as commodity information and coupon information (hereinafter referred to as "service information"), from beacon devices deployed in a supermarket, convenience store, department store, specialized store, etc. to a mobile terminal carried by a user. A mobile terminal that received a beacon signal from a beacon device can extract commodity information or the like from the beacon signal and display the commodity information on its display unit, using an application installed in the mobile terminal.

These beacon devices need appropriate maintenance, e.g., they need battery replacement if operating with a battery. Especially in a case where there are a large number of beacon devices, checking a condition of each individual beacon device is very troublesome.

Patent Literature (PTL) 1 discloses one example of a system in which information included in a beacon signal transmitted from a transmitter is displayed on a mobile terminal. In this system, condition information indicating a condition of a transmitter is included in information that the transmitter transmits to a mobile terminal and the mobile terminal stores received condition information of the transmitter. Then, when the mobile terminal has become able to communicate with a central terminal, it transmits the stored condition information of the transmitter to the central terminal and, thus, condition information of each transmitter is accumulated and managed at the central terminal.

Moreover, along with the popularization of communication terminals, such a system comes into common use that a connection is made between a communication terminal and an electronic device and the communication terminal receives information from the electronic device and utilizes that information. For example, a system is proposed in which a communication terminal transmits information acquired from an electronic device to a cloud computer and, thereby, receives provision of a service (refer to, e.g., PTL 2 to 4).

Systems described in PTL 2 to 4 allow an electronic device to connect to a communication terminal by radio communication, which is implemented by incorporating a communication system LSI (Large Scale Integration) in the electronic device, so that the communication terminal can receive provision of a service. Moreover, the communication system LSI incorporated in the electronic device generates an electric signal following user's operation or an electric signal to change a condition of the electronic device, according to a command received from an information processing device, and outputs such signal to a control unit of the electronic device, thus enabling it to operate the electronic device.

### Citation List

### Patent Literature

PTL 1: Japanese Unexamined Patent Application Publication No. 2013-38539
PTL 2: Japanese Unexamined Patent Application Publication No. 2013-182279
PTL 3: Japanese Unexamined Patent Application Publication No. 2013-191917
PTL 4: Japanese Unexamined Patent Application Publication No. 2013-191918

### Summary of Invention

### Technical Problem

However, in the system described in PTL 1, a mobile terminal needs to have a storage unit for storing condition information of a transmitter. Moreover, processing is required for the mobile terminal to recognize condition information and processing information of the transmitter, store the condition information of the transmitter into a storage unit, and transmit the condition information of the transmitter to a server. Therefore, problems reside in that this system lacks general versatility since only mobile terminals having a certain function for executing these operations are adaptable for the above-mentioned system, and in that a mobile terminal needs to have additional parts and, accordingly, consumes additional power, which imposes cost on the terminal. Moreover, if a user who uses a mobile terminal does not perform maintenance of a beacon device, condition information of the beacon device is not necessary for the mobile terminal and its user.

Moreover, in the systems described in PTL 2 to 4, it is possible for a communication terminal to utilize information from other electronic devices than an electronic device to be handled by the communication terminal and operate them. However, it is not needed to provide a service regarding other electronic devices than the electronic device to be handled.

### Solution to Problem

One aspect of the present invention resides in an electronic device management system including an electronic device having a radio communication function, a communication terminal capable of radio communication with this electronic device, and a server capable of communicating with this communication terminal, an electronic device management server, and an electronic device management method.

In one aspect of the present invention, a communication terminal, upon having received a radio signal transmitted from an electronic device, transmits, to a server, condition information indicating a condition of the electronic device and identifying information of the electronic device, included in the radio signal. The server, upon having received the identifying information of the electronic device from the communication terminal, transmits, to the communication terminal, necessary information for processing in the communication terminal depending on the received identifying information. Then, the communication terminal processes the information received from the server. Moreover, the server manages the condition information received from the communication terminal.

### Advantageous Effects of Invention

According to the present invention, since condition information of an electronic device is accumulated on an entity (e.g., a server) external to a communication terminal, it is possible to manage the condition information of the electronic device without imposing a burden on the communication terminal and its user.

### Brief Description of Drawings

[Fig. 1] Fig. 1 is an explanatory diagram depicting one example of a beacon signal transmitting and receiving system including a beacon device and a smartphone.
[Fig. 2] Fig. 2 is an overall configuration diagram of a beacon device management system pertaining to a first embodiment of the present invention.
[Fig. 3] Fig. 3 is an explanatory diagram depicting a data structure of a beacon signal which is output from a beacon device in Fig. 2.
[Fig. 4] Fig. 4 is an explanatory diagram depicting one example of a commodity information database which is stored on a server in Fig. 2.
[Fig. 5] Fig. 5 is an explanatory diagram depicting one example of a condition information database which is stored on the server in Fig. 2.
[Fig. 6] Fig. 6 is a sequence diagram illustrating a procedure for managing a condition of a beacon device by the beacon device management system in Fig. 2.
[Fig. 7] Fig. 7 is an explanatory diagram depicting a reporting example when remaining battery power is little.

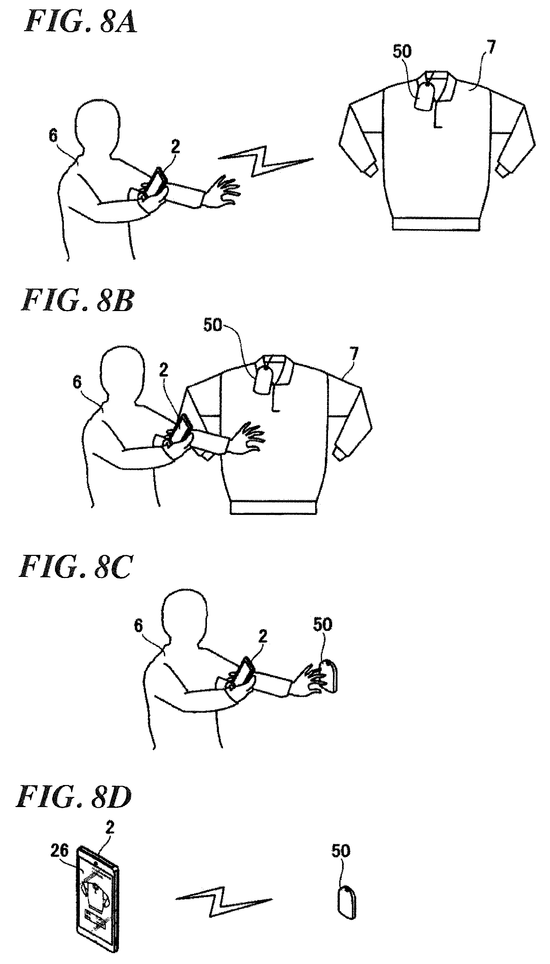

[Figs. 8] Figs. 8 are explanatory diagrams depicting appearance inside a clothing store, each diagram representing a positional relation between a smartphone and a beacon device pertaining to a second embodiment of the present invention. Fig. 8A depicts an example of configuration of a beacon signal transmitting and receiving system including a beacon device and a smartphone; Fig. 8B depicts an example in which a shopper takes a commodity; Fig. 8C depicts an example in which the shopper touches the beacon device; and Fig. 8D depicts an example in which the smartphone displays commodity information.
[Fig. 9] Fig. 9 is an overall configuration diagram of a beacon device management system pertaining to the second embodiment of the present invention.
[Fig. 10] Fig. 10 is an explanatory diagram depicting one example of a condition information database which is stored on a server in Fig. 9.
[Fig. 11] Fig. 11 is an overall configuration diagram of a beacon device management system pertaining to a third embodiment of the present invention.
[Fig. 12] Fig. 12 is a sequence diagram illustrating a procedure for managing a beacon device by the beacon device management system in Fig. 11.
[Fig. 13] Fig. 13 is a diagram depicting an example of overall configuration of an electronic device management system pertaining to a fourth embodiment of the present invention.
[Fig. 14] Fig. 14 is a diagram depicting an example of configuration of each device in the electronic device management system pertaining to the fourth embodiment of the present invention (for an instance where there is a match between an electronic device and a device to be controlled).
[Fig. 15] Fig. 15 is a diagram depicting an example of data structure of a radio signal which is output from an electronic device in Fig. 14.
[Fig. 16] Fig. 16 is a diagram depicting one example of an electronic device ID database which is stored on a server in Fig. 14.
[Fig. 17] Fig. 17 is a diagram depicting one example of a condition information database which is stored on the server in Fig. 14.
[Fig. 18] Fig. 18 is a sequence diagram illustrating a processing procedure for providing information to a communication terminal by the electronic device management system in Fig. 14.
[Fig. 19] Fig. 19 is a diagram depicting an example of configuration of each device in the electronic device management system in Fig. 14 (for an instance where there is a mismatch between an electronic device and a device to be controlled).
[Fig. 20] Fig. 20 is a diagram depicting one example of an electronic device ID database which is stored on a server in Fig. 19.
[Fig. 21] Fig. 21 is a diagram depicting one example of a condition information database which is stored on the server in Fig. 19.
[Fig. 22] Fig. 22 is a diagram depicting one example of an electronic device ID database in which a beacon ID is associated with an electronic device ID.
[Fig. 23] Fig. 23 is a diagram depicting one example of an electronic device ID database in which an ID of operational application is associated with IDs of electronic devices which can be controlled using the operational application.
[Fig. 24] Fig. 24 is a diagram depicting one example of an electronic device ID database in which an ID of operational application is associated with IDs of electronic devices in plural product categories which can be controlled using the operational application.

### Description of Embodiments

Exemplary embodiments for implementing the present invention will be described below with reference to the accompanying drawings. Descriptions are provided in order given below. In the drawings, components having substantially the same function or structure are assigned the same reference signs and their repetitive description is omitted.
1. First Embodiment (an example of managing remaining battery power of a beacon device as condition information)
2. Second Embodiment (an example of managing action onto a beacon device as condition information)
3. Third Embodiment (an example of encrypting a beacon signal and condition information)
4. Example of Modification
5. Fourth Embodiment (an example of managing a condition and operation of an electronic device as condition information)
6. Example of Modification

### <1. First Embodiment>

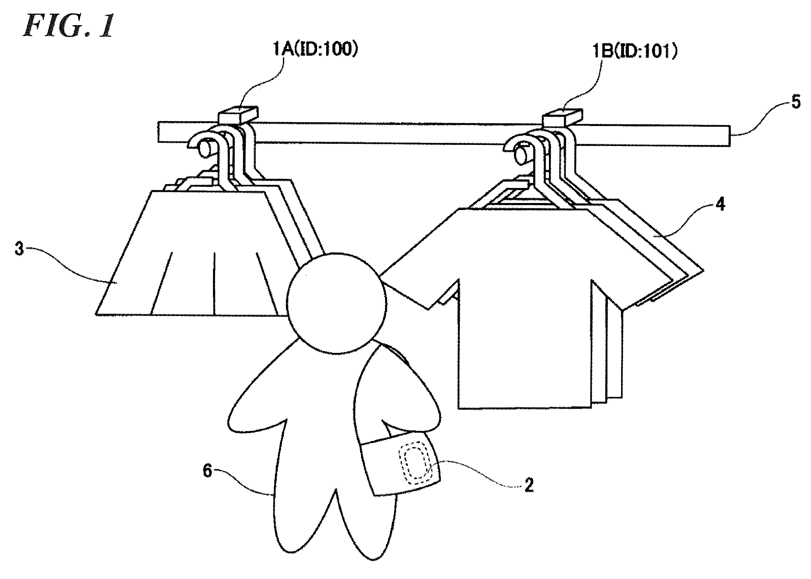

Fig. 1 is an explanatory diagram depicting one example of a beacon signal transmitting and receiving system including a beacon device (one example of an electronic device) and a smartphone (one example of a communication terminal).

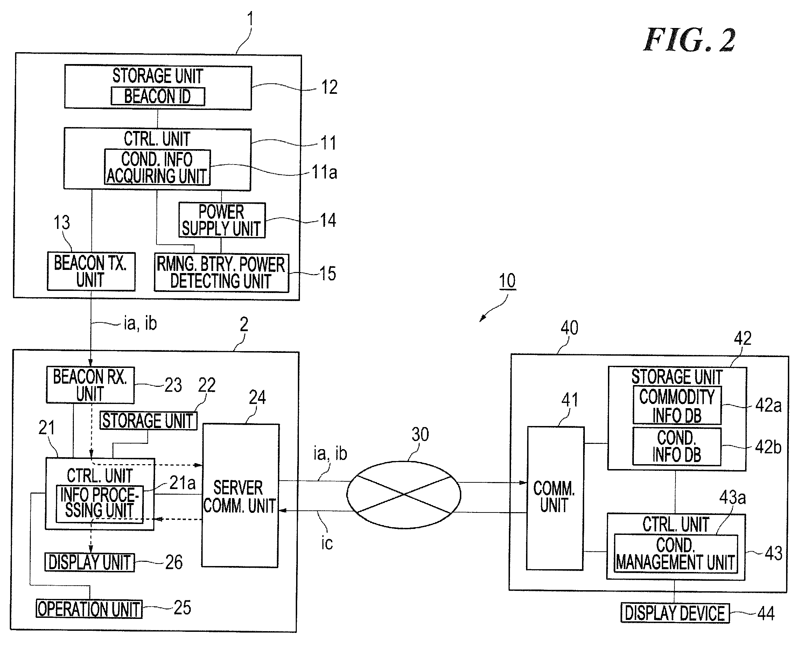

In the beacon signal transmitting and receiving system depicted in Fig. 1, beacon devices 1A and 1B intermittently transmit a beacon signal by radio communication. A smartphone 2 is one example of a communication terminal and receives a beacon signal transmitted from a beacon device 1A or 1B. In this beacon signal, identifying information (hereinafter referred to as "beacon ID") to identify the beacon devices 1A and 1B is included. This Beacon ID included in a beacon signal is transmitted from the smartphone 2 to a server 40 (see Fig. 2) which will be described later over a network. Then, the server 40 transmits information associated with a beacon ID to the smartphone 2 and, accordingly, information associated with the beacon ID (beacon device) is displayed on a display unit of smartphone 2. Information associated with a beacon ID, which is provided from the server 40, is information relevant to a particular article (e.g., a skirt 3 and a T-shirt 4 depicted as commodities), including a commodity image, commodity name, price, etc.

In an example of Fig. 1, hangers are hung from rod-like members protruding from a part of an interior wall 5 of a clothing store and plural skirts 3 and T-shirts 4 put on the hangers are set out. Then, the beacon device 1A is placed near the skirts 3 and the beacon ID (100) of the beacon device 1A and the skirts 3 are associated with each other. Moreover, the beacon device 1B is placed near the T-shirts 4 and the beacon ID (101) of the beacon device 1B and the T-shirts 4 are associated with each other. Here, when a shopper 6 carrying the smartphone 2 comes close to the beacon device 1A, commodity information of the skirts 3 associated with the beacon ID (100) of the beacon device 1A is displayed on the display unit of the smartphone 2. Likewise, when the shopper 6 comes close to the beacon device 1B, commodity information of the T-shirts 4 associated with the beacon ID (101) of the beacon device 1B is displayed on the display unit of the smartphone 2.

In the following description, in a case where the beacon device 1A and beacon device 1B are not individuated or where they are termed collectively, they are referred to as a beacon device 1. Each beacon device 1 may be attached to each commodity, for example, by fastening it to each commodity of the skirts 3 and T-shirts 4 with a clip or the like.

In the following, as a first embodiment, an example is described where a radio signal (e.g., beacon signal) which is transmitted by an electronic device such as a beacon device, as described above, includes condition information indicating a condition of the electronic device and this condition information is used for maintenance of the electronic device by retaining and managing it outside a communication terminal.

### [Configuration of a beacon device management system]

Fig. 2 is an overall configuration diagram of a beacon device management system 10 (one example of an electronic device management system) which manages condition information of a beacon device 1. In a beacon device 1, a smartphone 2, and a server 40 which constitute the beacon device management system 10, transmission of condition information which is included in a beacon signal is performed by running a program by a computer and through cooperation of functional blocks which will be described later.

The beacon device management system 10 includes a beacon device 1, a smartphone 2, and a server 40. On the server 40, a database of information that is associated with the beacon ID of the beacon device 1 is stored. The information is, for example, the URL (Uniform Resource Locator) of a commodity site which is specified by the beacon ID. The URL of the commodity site is transmitted from the server 40 to the smartphone 2 as the information associated with the beacon ID.

### (Configuration of the beacon device)

The beacon device 1 includes a control unit 11, a storage unit 12, a beacon transmitting unit 13, a power supply unit 14, and a remaining battery power detecting unit 15.

The control unit 11 controls operation of all internal parts of the beacon device 1. Moreover, the control unit 11 includes a condition information acquiring unit 11a. The condition information acquiring unit 11a acquires condition information indicating a condition of the beacon device 1. This control unit 11 is configured, for example, by a Central Processing Unit (CPU) which can be driven with lower consumed power. The control unit 11 controls the beacon transmitting unit 13 to transmit a beacon signal including beacon ID ia stored in the storage unit 12 and condition information ib indicating a condition of the beacon device 1 to the smartphone 2.

The storage unit 12 (one example of a first storage unit) is configured by a storage medium such as, e.g., ROM (Read Only Memory), RAM (Random Access Memory), etc. In this storage unit 12, programs to be executed by the control unit 11, parameters, and various data such as beacon ID are permanently or temporarily stored.

The beacon transmitting unit 13 transmits a beacon signal including the beacon ID ia and condition information ib of the beacon device 1 to the smartphone 2 under control of the control unit 11. The beacon transmitting unit 13 generates, as a beacon signal, e.g., an advertisement signal which is prescribed in the Bluetooth (registered trademark) Low Energy (LE) standard (hereinafter abbreviated to a "BLE standard") and sends the beacon signal to an antenna, which is not depicted, according to a procedure complying with the BLE standard. Then, the beacon signal is transmitted in the vicinity of the beacon device 1 from the antenna.

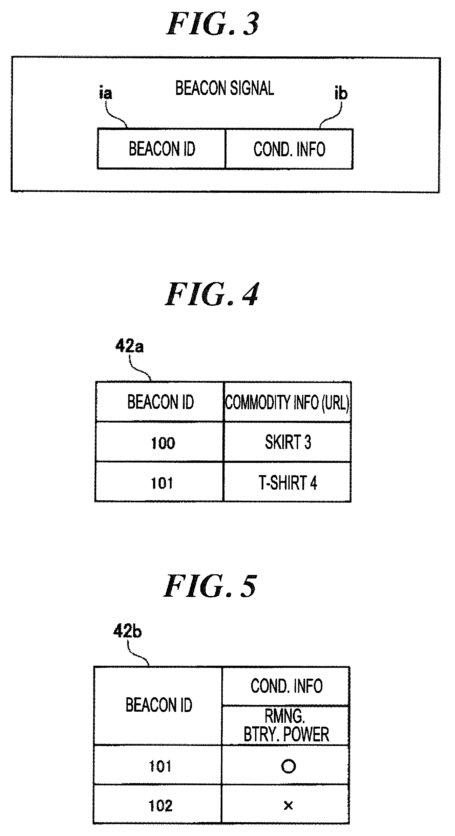

Fig. 3 depicts a data structure of a beacon signal which is output from the beacon device 1. For example, in a payload (a data body part) of a packet constituting a beacon signal, beacon ID ia to identify the beacon device 1 and condition information ib indicating a condition of the beacon device 1 are encapsulated.

The power supply unit 14 supplies a drive voltage to all internal parts of the beacon device 1. For the power supply unit 14, e.g., a button battery is used. Since the power supply unit 14 is small in size and the battery capacity is small, it is required to reduce, as much as possible, power consumed by all internal parts of the beacon device 1.

The remaining battery power detecting unit 15 detects the remaining capacity (remaining battery power) of the power supply unit 14 and sends a result of the detection to the condition information acquiring unit 11a within the control unit 11. For example, the remaining battery power detecting unit 15 measures the voltage of the power supply unit 14 and sends a measurement value to the condition information acquiring unit 11a.

From this result of the detection, the condition information acquiring unit 11a within the control unit 11 detects that the beacon device 1 has come into a predefined condition (for example, remaining battery power is little) and acquires condition information indicating that the beacon device 1 is in the predefined condition. In the present embodiment, condition information is information relevant to remaining battery power. The condition information acquiring unit 11a compares the current remaining battery power with a preset threshold value and, if the remaining battery power is lower than the threshold value, judges that remaining battery power is little (short). For instance, let us suppose that the threshold value is set to 90% of a rated voltage (specified value) of the power supply unit 14. If the voltage of the power supply unit 14 input from the remaining battery power detecting unit 15 has decreased by 10% or more from the rated voltage, the condition information acquiring unit 11a judges that remaining battery power is little and acquires this information as condition information. And now, this threshold value can be determined arbitrarily according to the specifications of the power supply unit 14 or the beacon device 1. Then, the condition information acquiring unit 11a, once having acquired this condition information, includes the condition information in a beacon signal. This beacon signal is transmitted via the beacon transmitting unit 13.

Meanwhile, if the beacon device 1 is not yet in the predefined condition (condition of remaining battery power shortage), condition information is not transmitted from the beacon device 1 to the smartphone 2 and only the beacon ID is to be transmitted. And now, it may be arranged such that, also when the power supply unit 14 (e.g., a button battery) has been initialized, for example, upon its replacement, the beacon device transmits condition information to the smartphone 2.

### (Configuration of the smartphone)

The smartphone 2 includes a control unit 21, a storage unit 22, a beacon receiving unit 23, a server communication unit 24, an operation unit 25, and a display unit 26.

The control unit 21 controls all internal parts of the smartphone 2 according to a program, parameters, and other data which it has read out from the storage unit 22. The control unit 21 receives a beacon signal including beacon ID ia and condition information ib from the beacon device 1 and transmits the beacon ID ia and condition information ib included in the beacon signal to the server 40 over a network 30 such as Internet, as is, without recognizing them. And yet, although it was mentioned that the control unit 21 does not recognize the beacon ID ia and condition information ib, it may recognize only the beacon ID ia. Moreover, the control unit 21 includes an information processing unit 21a which processes information ic (URL) associated with a beacon ID received from the server 40. The control unit 21 performs various control to display text, images, etc. on the display unit 26, based on an operating signal input from the operation unit 25 and various information which the server communication unit 24 received via an antenna which is not depicted.

The storage unit 22 is configured by a storage medium such as, e.g., ROM, RAM, etc. In this storage unit 22, programs for controlling all internal parts of the smartphone 2, parameters, and various data such as information received from the server 40 are permanently or temporarily stored.

The beacon receiving unit 23 performs communication control in accordance with the BLE standard mentioned previously. Moreover, the beacon receiving unit 23 sends a beacon signal received from the beacon device 1 to the control unit 21. Furthermore, the beacon receiving unit 23 performs processing to demodulate data received by radio from the antenna which is not depicted and send it to the control unit 21.

The server communication unit 24 performs control to carry out base-station communication which is performed between the smartphone and a base-station antenna which is not depicted. The server communication unit 24 also controls packet communication for mutual data communication with an access point or a router, which is not depicted, for, e.g., Wi-Fi (registered trademark). Moreover, the server communication unit 24 performs processing to transmit modulated data by radio from the antenna which is not depicted, and to demodulate data received by radio through the antenna and pass it to the control unit 21.

The operation unit 25 outputs an operating signal to the control unit 21, according to input by user operation performed with buttons and switches, which are not depicted, arranged on the casing of the smartphone 2 and, in addition, by touching the screen.

The display unit 26 displays information received from the server 40 under control of the control unit 21. The display unit 26 is configured by, e.g. a liquid crystal display panel. And now, in the smartphone 2, the operation unit 25 and the display unit 26 are formed as a touch panel display in which a touch screen is placed on a display screen.

### (Configuration of the server)

The server 40 includes a communication unit 41, a storage unit 42, and a control unit 43.

The communication unit 41 (one example of a terminal communication unit) performs control to carry out base-station communication which is performed between the server and a base station which is not depicted. The communication unit 41 also controls packet communication for mutual data communication with an access point or a router, which is not depicted, for, e.g., Wi-Fi (registered trademark). Moreover, the communication unit 41 performs processing to transmit modulated data by radio from an antenna which is not depicted, and to demodulate data received by radio through the antenna and pass it to the storage unit 42 and a condition management unit 43a.

The storage unit 42 (one example of a third storage unit) is configured by a storage medium such as, e.g., ROM, RAM, etc. In this storage unit 42, programs for controlling all internal parts of the server 40, parameters, and various data such as beacon ID ia and condition information ib received from the smartphone 2 are permanently or temporarily stored. Here, a commodity information database (described as "commodity info DB" in Fig. 2) 42a and a condition information database (described as "cond. info DB" in Fig. 2) 42b are stored in the storage unit 42. Information that is provided on a commodity site includes, by way of example, commodity information on a commodity (name, description, image, price, etc. of commodity), information on a store that sells the commodity, or the like. In the following, in a case where commodity information on a commodity and other information on the commodity are termed collectively, they are referred to as commodity information on the commodity or the like.

Fig. 4 depicts one example of the commodity information database 42a.

In the commodity information database 42a, a beacon ID ia received from the smartphone 2 and commodity information associated with the beacon ID ia are accumulated. In this example, the URL of a commodity site for skirt 3 is recorded as commodity information, if the beacon ID is 100; the URL of a commodity site for T-shirt 4 is recorded as commodity information, if the beacon ID is 101.

Fig. 5 is an explanatory diagram depicting one example of the condition information database 42b. In the condition information database 42b, a beacon ID ia received from the smartphone 2 and condition information ib of a beacon device 1 associated with the beacon ID ia are accumulated. In this example, for a beacon device whose beacon ID is 100, an indication that remaining battery power is satisfactory (mark O) is recorded as condition information; for a beacon device whose beacon ID is 101, an indication that remaining battery power is lacking (mark X) is recorded as condition information. That is, for the beacon device with beacon ID of 100 for which remaining battery power is satisfactory, a flag is set on in the remaining battery power column; for the beacon device with beacon ID of 101 for which remaining battery power is short, a flag is set off in the remaining battery power column.

And now, in the condition information database 42b, instead of information indicating whether remaining battery power is "satisfactory" or "lacking", remaining battery level information (a remaining battery level value) may be recorded. That is, a beacon signal including remaining battery level information as condition information is transmitted from a beacon device 1 to the smartphone 2. In this case, the user can exactly know the remaining battery level.

The control unit 43 controls operation of all internal parts of the server 40. Moreover, the control unit 43 has a function as a condition management unit 43a. This control unit 43 is configured, for example, by a Central Processing Unit (CPU). The control unit 43 controls processing to receive the beacon ID ia and condition information ib of a beacon device 1 from the smartphone 2, processing to transmit information ic (URL) associated with the beacon ID ia to the smartphone 2, and processing to manage the commodity information database 42a and the condition information database 42b. The control unit 43 updates the condition information database 42b, each time the communication unit 41 receives beacon ID ia and condition information ib from the smartphone 2, in other words, each time a beacon device 1 transmits a beacon signal including condition information ib to the smartphone 2.

As described previously, in the present embodiment, URL that is information for accessing a commodity site is used as information associated with a beacon ID. That is, in the present embodiment, information ic which is associated with beacon ID ia and should be transmitted from the server 40 to the smartphone 2 is URL for accessing a commodity site. Name, description, price, etc. of commodity are commodity information in a narrow sense, whereas this URL is commodity information in a broad sense.

When a URL transmitted from the server 40 to the smartphone 2 is displayed on the display unit 26, a shopper 6 who holds the smartphone 2 clicks on this URL. This clicking causes the smartphone 2 to start downloading from a commodity site, which is identified by the URL and is built on a Web server which the smartphone accessed over the network 30. Then, the smartphone 2 displays downloaded commodity information on the commodity or the like on the display unit 26. Since this commodity site involves information on many commodities in addition to the commodity information on the commodity in which the shopper 6 took interest, it is possible to invoke the willingness of the shopper 6 to buy. And now, although an example was described in which the commodity site was built on an arbitrary Web server connected to the network 30, the commodity site may, of course, be built on the server 40.

The condition management unit 43a manages the condition information ib of a beacon device 1 received from the smartphone 2. That is, the condition management unit 43a checks the condition information database 42b and manages the condition information of a beacon device 1. For example, each time the condition information database 42b is updated, the condition management unit 43a checks condition information in the condition information database 42b and performs required processing such as reporting lack of battery power, if occurs.

A display device 44 is connected to the control unit 43 (condition management unit 43a) of the server 40 via an interface which is not depicted. The display device 44 is configured by, e.g. a liquid crystal display.

### [Procedure for managing beacon device condition]

Then, a procedure for managing a condition of a beacon device 1 is described.

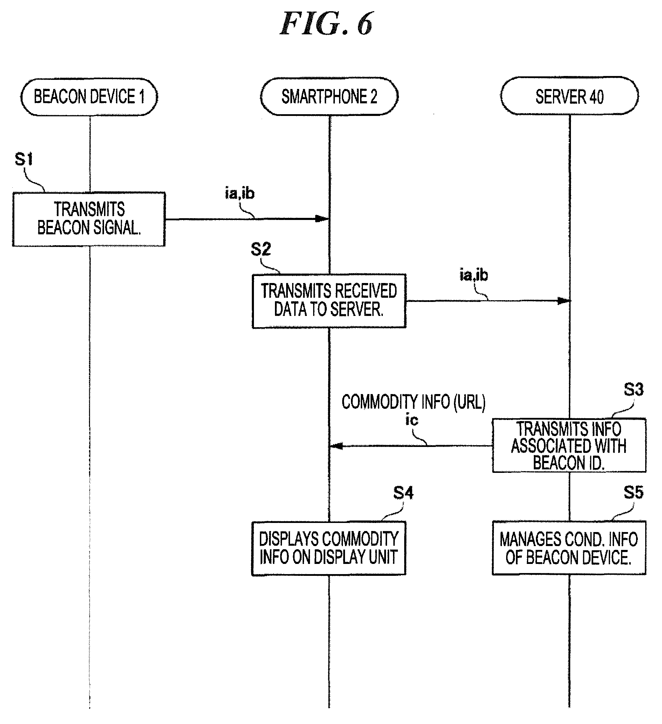

Fig. 6 is a sequence diagram illustrating a procedure for managing a condition of a beacon device 1 by the beacon device management system 10.

First, at the beacon device 1, the beacon transmitting unit 13 transmits a beacon signal including the beacon ID ia and condition information ib of the beacon device 1 to the smartphone 2 under control of the control unit 11 (step S1).

Next, at the smartphone 2, the beacon receiving unit 23 receives the beacon signal under control of the control unit 21. Then, the server communication unit 24 transmits data including the beacon ID ia and condition information ib to the server 40 over the network 30 under control of the control unit 21 (step S2). The smartphone 2 does not recognize the contents of the beacon signal (data contents).

Next, the server 40 receives, through the communication unit 41, the data including the beacon ID ia and condition information ib from the smartphone 2. Then, the control unit 43 of the server 40 transmits, through the communication unit 41, a URL for accessing a commodity site which provides commodity information, as information ic associated with the received beacon ID ia, to the smartphone 2 (step S3).

At the smartphone 2, the information processing unit 21a performs processing to display the URL transmitted from the server 40 on the display unit 26. When the shopper 6 holding the smartphone 2 clicks on this URL, the smartphone 2 accesses over the network the commodity site identified by the URL. Then, the smartphone 2 starts downloading from the accessed commodity site. Then, the smartphone displays the downloaded commodity information on the commodity on the display unit 26 (step S4).

Meanwhile, at the server 40, the control unit 43 stores the condition information ib of the beacon device 1 received from the smartphone 2, together with the beacon ID ia, into the condition information database 42b. Then, the condition management unit 43a manages the condition information of the beacon device 1, based on the contents of the condition information database 42 (step S5). For instance, if, in the condition information database 42b, there is a beacon ID (beacon device 1) for which remaining battery power is lacking (remaining battery power is less than the threshold value), the condition management unit 43a reports that the beacon device having the beacon ID lacks battery power.

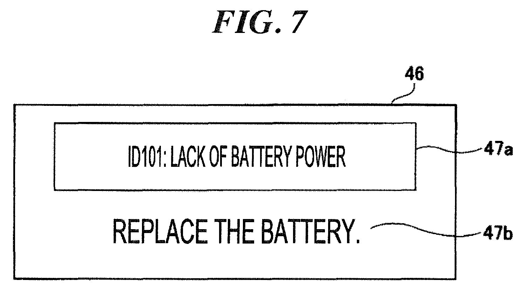

Fig. 7 is an explanatory diagram depicting a reporting example when remaining battery power is little.

For instance, in a case where the remaining battery power of a beacon device 1B is lacking, the condition management unit 43a of the server 40 causes the display device 44 to display a warning message 47a representing a number "101" as the beacon ID of the beacon device 1B and "lack of battery power" on the display screen 46, as depicted in Fig. 7. By displaying an action message 47b, "replace the battery", an administrator who watched this display can also replace the battery of the beacon device 1B without delay. And now, a reporting means is not limited to display and may be voice or vibration.

In the first embodiment described above, beacon ID ia and condition information ib included in a beacon signal transmitted from a beacon device 1 to the smartphone 2 are transmitted, as is, to the server 40 through the smartphone 2. The server 40 accumulates received condition information ib of the beacon device 1. Moreover, the server 40 transmits a URL to the smartphone 2 as information ic associated with the beacon ID received from the smartphone 2. Then, the smartphone 2 accesses a commodity site identified by the URL and displays commodity information on the commodity or the like on the display unit 26.

After transmission through the smartphone 2 in this manner, condition information ib of a beacon device 1 is retained on an external server 40 and, thus, the smartphone 2 does not need to have additional parts and perform additional processing which are required heretofore. Therefore, it is possible to manage the condition information ib of a beacon device 1 easily without imposing a burden on the smartphone 2 and the shopper 6 who uses the smartphone 2. And now, not only remaining battery power, information on beacon signal transmission frequency, transmission time, etc. is included in the condition information ib of a beacon device 1. Accordingly, the administrator of the beacon device management system 10 can check the condition information ib of a beacon device 1 output from the server 40 to the display device 44 and, based on this condition information ib, the administrator can carry out maintenance appropriately, such as replacing the battery of the beacon device 1. Moreover, the shopper 6 who uses the smartphone 2 can check commodity information on the commodity or the like displayed on the display unit 26 in the same way as before.

### <2. Second Embodiment>

A second embodiment of the present invention is arranged such that a beacon device (Fig. 2) pertaining to the first embodiment is provided with a sensor for sensing a condition of the beacon device.

To begin with, one example of a beacon signal transmitting and receiving system including a beacon device and a smartphone, to which the second embodiment is applied, is described with reference to a set of Figs. 8.

Figs. 8 are explanatory diagrams depicting appearance inside a clothing store, each diagram representing a positional relation between a smartphone 2 and a beacon device 50 pertaining to the second embodiment of the present invention. Fig. 8A depicts an example of configuration of a beacon signal transmitting and receiving system including a beacon device 50 and a smartphone 2. Fig. 8B depicts an example in which a shopper 6 takes a commodity. Fig. 8C depicts an example in which the shopper 6 touches the beacon device 50. Fig. 8D depicts an example in which the smartphone 2 displays commodity information.

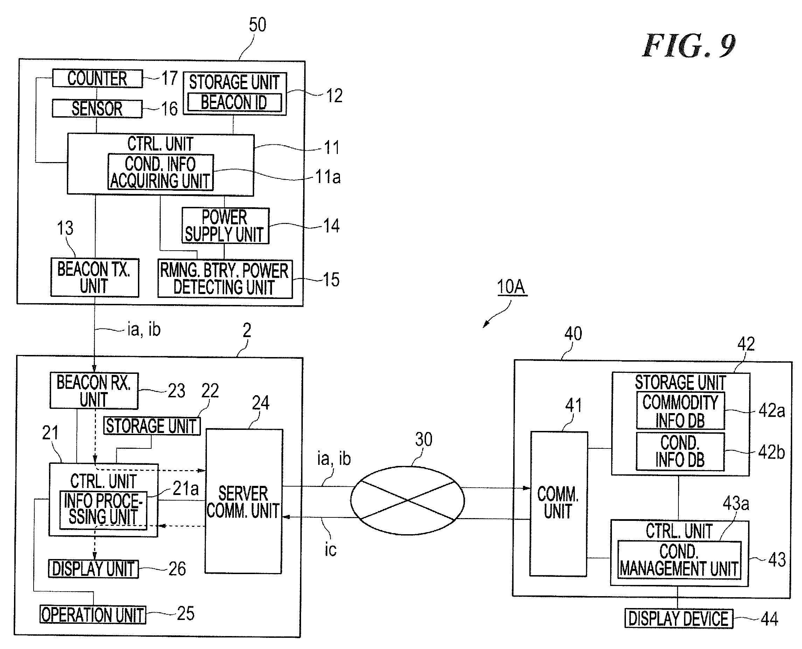

Fig. 8A depicts an example in which a commodity 7 put on a hanger, which is not depicted, is set out inside a clothing store. The beacon device 50 is fastened to this commodity 7 with a clip or the like. When the shopper 6 does not touch the commodity 7, the beacon device 50 does not transmit a beacon signal and a sensor 16 (see Fig. 9 for which description will be provided later) incorporated in the beacon device 50 is only operating. The sensor 16 is, e.g. an inclination sensor.

Meanwhile, the shopper 6 carries around the smartphone 2 and looks for a commodity 7 that he or she wants to buy inside the clothing store.

When the shopper 6 takes a commodity 7 in which he or she took interest (Fig. 8B) or when the shopper 6 touches the beacon device 50 hung on a commodity 7 (Fig. 8C), the sensor 16 incorporated in the beacon device 50 senses inclination. Triggered by thus sensing inclination by the sensor 16, the beacon device 50 starts to transmit a beacon signal including its beacon ID toward the smartphone 2.

As depicted in Fig. 8D, the smartphone 2, upon having received the beacon signal from the beacon device 50, transmits the beacon ID extracted from the beacon signal to a server 40 (see Fig. 9) over a network. Then, the server 40 transmits information (URL) associated with the beacon ID to the smartphone 2 and the information associated with the beacon ID (beacon device 50) is displayed on the display unit 26 of the smartphone 2. In this way, the shopper 6 can acquire information relevant to the commodity 7 in which he or she took interest.

### [Configuration of a beacon device management system]

Fig. 9 is an overall configuration diagram of a beacon device management system 10A pertaining to the second embodiment of the present invention.

Difference of the beacon device management system 10A from the beacon device management system 10 (Fig. 2) lies in that the beacon device 50 includes a sensor 16 and a counter 17. Descriptions are provided below about the beacon device management system 10A, focusing on this difference from the beacon device management system 10.

The sensor 16 of the beacon device 50 is one example of an input unit which accepts input by user action onto the beacon device 50. In the present embodiment, the sensor 16 is an inclination sensor which senses inclination. The sensor 16 is provided with a pair of terminals and a metallic ball, all of which are not depicted, inside it. When the sensor 16 is placed at a predetermined angle, the metallic ball stands still in a position where it does not connect both the terminals. When the sensor 16 has inclined by a certain angle or more from the predetermined angle, the metallic ball moves to a position where it connects both the terminals. Upon making connection between the terminals, an electric signal is sent to the counter 17 as a sensing output.

The counter 17 counts the number of times that a sensing output has been supplied from the sensor 16, that is, the number of times that the beacon device 50 has inclined and sends a count value to the condition information acquiring unit 11a in the control unit 11 as information indicating a condition of the beacon device 50. The count value signifies the number of times that the shopper 6 has acted on the beacon device 50, that is, the number of times that the shopper 6 has taken or touched the commodity 7.

The condition information acquiring unit 11a acquires a count value supplied from the counter 17 as one piece of condition information. The control unit 11 detects that the beacon device 50 has inclined (has been acted on) by an increase in the count value supplied from the counter 17 and, in response to the action, exerts control to transmit a beacon signal to the smartphone 2. Then, by the control of the control unit 11, the beacon transmitting unit 13 transmits a beacon signal including the beacon ID ia and information on remaining battery power and the count value as condition information ib to the smartphone 2. And now, in addition to transmitting a beacon signal in response to action onto the beacon device 50, when the beacon device 50 has come into a predefined condition (e.g., remaining battery power is little), the beacon transmitting unit may transmit a beacon signal including information on remaining battery power and a count value at the instant, as is the case for the first embodiment.

The smartphone 2 receives the beacon signal transmitted from the beacon device 50. Then, the smartphone extracts the beacon ID ia and the condition information ib including the information on remaining battery power and the count value included in the beacon signal and transmits data including the beacon ID ia and the condition information ib to the server 40 over the network 30.

The server 40 transmits a URL for accessing a commodity site which provides, e.g., coupon information, as information ic associated with the beacon ID ia received from the smartphone 2. The smartphone 2 displays the URL transmitted from the server 40 to the smartphone 2 on the display unit 26 and accesses a commodity site identified by the URL in response to clicking it by the shopper 6. Then, the smartphone 2 starts downloading from the accessed commodity site. Then, it displays downloaded coupon information on the commodity on the display unit 26.

Meanwhile, the server 40 stores the condition information ib (remaining battery power and count value) of the beacon device 50 received from the smartphone 2, associated with the beacon ID ia, into the condition information database 42b. Then, the condition management unit 43a manages the condition information of a beacon device, based on the contents of the condition information database 42b.

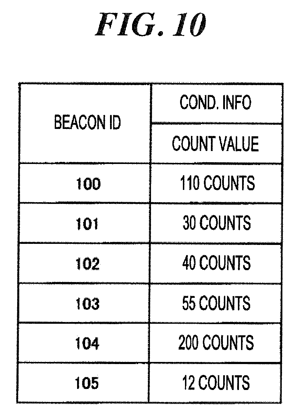

Fig. 10 is an explanatory diagram depicting one example of count values within the condition information database 42b stored on the server 40.

Here, count values for beacon devices with beacon IDs of 100,101,102,103, 104, and 105 are 110 counts, 30 counts, 40 counts, 55 counts, 200 counts, and 12 counts, respectively. From this table, it is found that a commodity associated with a beacon device with a beacon ID of 104 is of high popularity and a commodity associated with a beacon device with a beacon ID of 105 is of low popularity.

In the second embodiment described above, the beacon device 50 acquires condition information including a count value of the counter 17 (the number of times that input has occurred by action onto the beacon device 50) in addition to remaining battery power. The beacon device 50 transmits a beacon signal including the beacon ID ia and condition information ib composed of remaining battery power and the count value to the smartphone 2. The smartphone 2 transmits the beacon ID ia and the condition information ib composed of remaining battery power and the count value, included in the received beacon signal, to the server 40. Then, the server 40 transmits, to the smartphone 2, information (the URL of coupon information, here) associated with the beacon ID ia received from the smartphone 2. Moreover, the server 40 stores the received condition information ib (remaining battery power and count value) associated with the beacon ID ia into the condition information database 42b. Then, the condition management unit 43a of the server 40 manages the condition information of the beacon device 50, based on the contents of the condition information database 42b.

According to the configuration as described above, the condition management unit 43a of the server 40 can acquire information as to which commodity 7 the shopper 6 takes interest in by acquiring a count value which is the number of times that input has occurred by action of the shopper 6 onto the beacon device 50, in addition to that it can manage remaining battery power of the beacon device 50.

And now, although, in the present embodiment, the beacon device 50 acquires remaining battery power and a count value as condition information ib, it may acquire only a count value.

### <3. Third Embodiment>

A third embodiment of the present invention is configured such that a beacon device (Fig. 2) pertaining to the first embodiment outputs an encrypted beacon signal which is transmitted via a smartphone 2 to a server at which the beacon signal is decrypted.

### [Configuration of a beacon device management system]

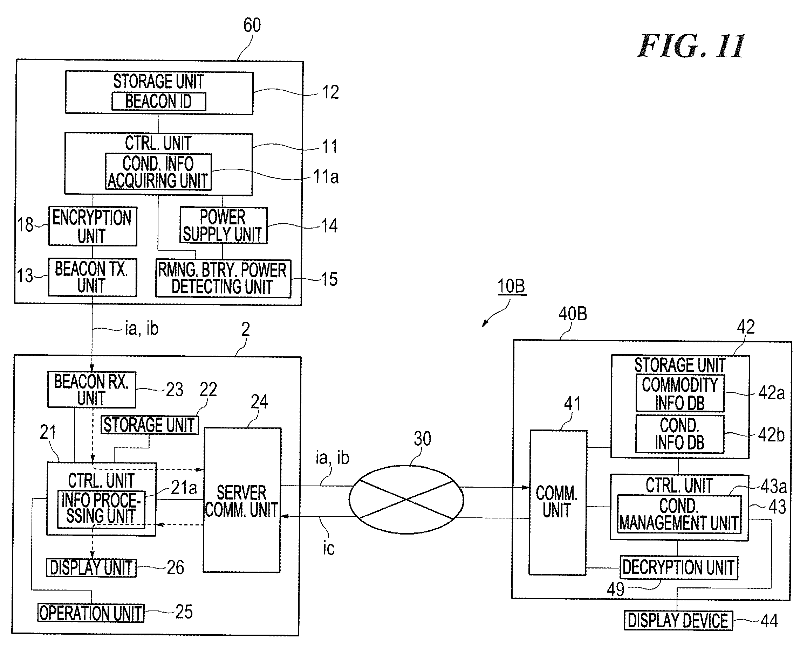

Fig. 11 is an overall configuration diagram of a beacon device management system 10B pertaining to the third embodiment of the present invention.

Difference of the beacon device management system 10B from the beacon device management system 10 (Fig. 2) lies in that a beacon device 60 includes an encryption function and a server 40B includes a decryption function. Descriptions are provided below about the beacon device management system 10B, focusing on this difference from the beacon device management system 10 (Fig. 2).

The beacon device 60 includes an encryption unit 18 in addition to the control unit 11, storage unit 12, beacon transmitting unit 13, power supply unit 14, and remaining battery power detecting unit 15.

The encryption unit 18 encrypts data (information) supplied from the control unit 11 by applying a certain rule to the data and sends encrypted data to the beacon transmitting unit 13. Here, it encrypts beacon ID ia and data of remaining battery power as condition information ib and sends encrypted data to the beacon transmitting unit 13. Alternatively, it may encrypt an entire beacon signal including beacon ID ia and condition information ib.

The beacon transmitting unit 13 generates a beacon signal including data encrypted by the encryption unit 18 and transmits it to the smartphone 2. This beacon signal including encrypted data of beacon ID ia and condition information ib is transmitted via the smartphone 2 to a server 40B.

The server 40B includes a decryption unit 49 in addition to the communication unit 41, storage unit 42, and control unit 43.

The decryption unit 49 decrypts encrypted data of beacon ID ia and condition information ib included in a beacon signal received by the communication unit 41 and sends decrypted ones to the control unit 43. If an entire beacon signal has been encrypted, the decryption unit 49 decrypts the beacon signal received by the communication unit 41, acquires beacon ID ia and condition information ib, and sends them to the control unit 43.

### [Procedure for managing beacon device condition]

Then, a procedure for managing a condition of the beacon device 60 is described.

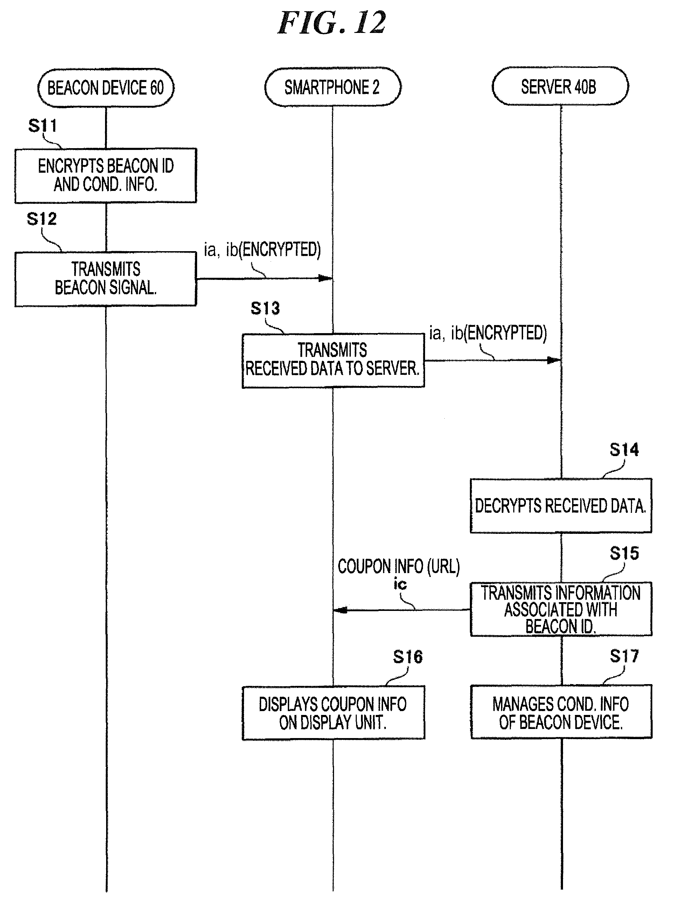

Fig. 12 is a sequence diagram illustrating a procedure for managing the beacon device 60 by the beacon device management system 10B. Steps S12, S13, S15, S16, and S17 in Fig. 12 correspond to steps S1 to S5 in Fig. 6.

First, at the beacon device 60, the encryption unit 18 encrypts data of the beacon ID and condition information (e.g., remaining battery power) and sends encrypted ones to the beacon transmitting unit 13 (step S11). The beacon transmitting unit 13 transmits a beacon signal including encrypted data of beacon ID ia and condition information ib to the smartphone 2 under control of the control unit 11 (step S12).

The smartphone 2 extracts encrypted data of beacon ID ia and condition information ib from the received beacon signal and transmits the encrypted data of beacon ID ia and condition information ib to the server 40B over the network 30 (step S13).

Next, the server 40 receives, through the communication unit 41, the encrypted data of beacon ID ia and condition information ib from the smartphone 2. Then, the decryption unit 49 decrypts the data received through the communication unit 41 and sends decrypted data to the control unit 43 (step S14).

Then, the control unit 43 of the server 40 transmits, through the communication unit 41, a URL for accessing a commodity site which provides coupon information, as information ic associated with the decrypted beacon ID ia, to the smartphone 2 (step S15).

At the smartphone 2, the information processing unit 21a performs processing to display the URL transmitted from the server 40 on the display unit 26. When the shopper 6 holding the smartphone 2 clicks on this URL, the smartphone 2 accesses over the network the commodity site identified by the URL. Then, the smartphone 2 starts downloading from the accessed commodity site. Then, the smartphone displays the downloaded coupon information on the commodity on the display unit 26 (step S16).

Meanwhile, at the server 40, the control unit 43 stores the decrypted condition information ib of the beacon device 60, together with the beacon ID ia, into the condition information database 42b. Then, the condition management unit 43a manages the condition information of the beacon device 60, based on the contents of the condition information database 42b (step S17).

According to the third embodiment described above, operation and advantageous effects which are noted below can be provided in addition to those provided by the first embodiment.

Condition information ib included in a beacon signal which is transmitted from the beacon device 60 is encrypted, whereas the smartphone 2 does not have a function of decrypting the encrypted condition information ib. Therefore, the smartphone 2 does not need to have additional parts such as a storage unit for storing the condition information ib and a decryption unit.

Moreover, since the encrypted condition information ib is not decrypted at the smartphone 2, the shopper 6 who uses the smartphone 2 shall not see the condition information ib and no burden is imposed on the user. Furthermore, the smartphone 2 that relays transmission is unable to analyze the condition information ib maliciously.

### <4. Example of Modification>

While, in the foregoing first to third embodiments, a configuration is illustrated in which the server 40, 40B manages condition information of a beacon device, a dedicated beacon device management apparatus having a condition management unit 43a may be provided separately from such server. That is, condition information ib is transmitted from the server 40, 40B to the beacon device management apparatus and condition information of a beacon device is managed at the beacon device management apparatus. In this case, the communication unit 41 of the server 40, 40B serves as an output unit which outputs received condition information ib to outside. Then, in this case, a part of the load on the server 40, 40B is transferred to the beacon device management apparatus.

A variety of types of sensors can also be used besides the sensor 16 mentioned in the foregoing second embodiment. For example, a pressure sensor, vibration sensor, acceleration sensor, weight sensor, electrostatic sensor, tactile switch, etc. may be used singly or in combination.

A pressure sensor senses, for example, a pressure applied to it and outputs an electric signal. A vibration sensor can sense vibration, for example, by rolling of an electrically conductive ball which is supported by a damper. An acceleration sensor can sense, for example, a change in acceleration in one axis direction to three axes directions. A weight sensor can sense weight, for example, using a piezo element or the like. An electrostatic sensor can sense approaching of an object, based on a change in electrostatic capacitance between electrodes. A tactile switch (push button) is turned on when an operating portion has been pressed and turned off when the operating portion is released, and can sense an explicit action by the shopper 6.

Any of the sensors mentioned above enables it to sense a change in the posture and operation of a beacon device 1 due to any action made by the shopper 6 onto an article in which he or she took interest.

Moreover, although, in the foregoing second embodiment, a configuration is illustrated in which a beacon signal is transmitted in response to action onto the beacon device 50, no limitation to this example is intended. For instance, when the beacon device 50 has come into a predefined condition (e.g., a count value is at or above a threshold value), a beacon signal may be transmitted, as is the case for the first embodiment. In this case, it is possible for the server 40 to acquire count value information, while there is a marked reduction in the number of times of beacon signal transmission. Plural threshold values for count values may be set, e.g., first threshold and second threshold values.

Moreover, in the foregoing first to third embodiments, a position where a beacon device is placed is not only on a commodity or on a hanger; it is assumable that a beacon device may be placed on a wall, on a stand, near a cash register, on the ceiling or floor inside a store, etc.

### <5. Fourth Embodiment>

A fourth embodiment of the present invention is adapted such that a server can provide to a user a service (e.g., for operation) regarding an electronic device to be handled by a communication terminal in addition to condition information indicating a condition of the electronic device.

### [General description of an electronic device management system]

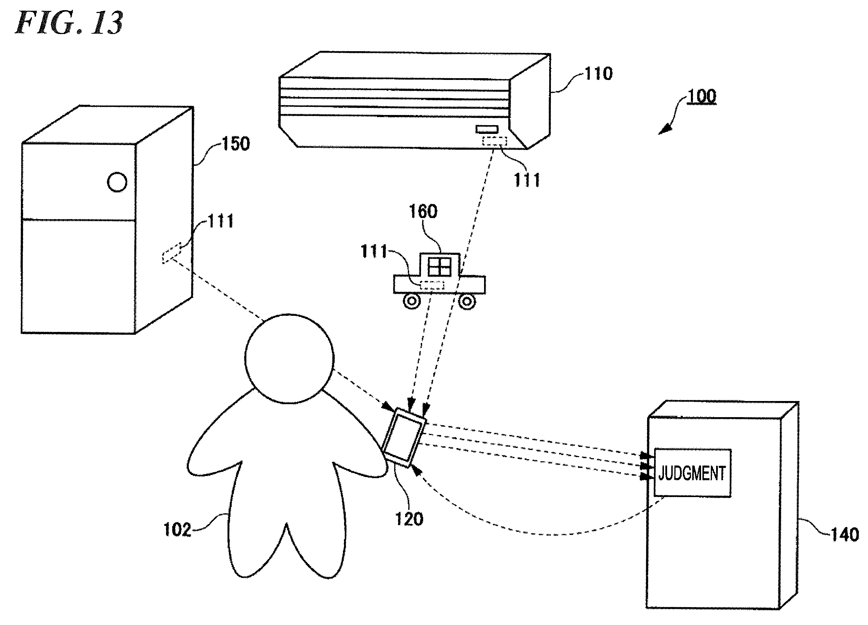

Fig. 13 is a diagram depicting an example of overall configuration of an electronic device management system pertaining to the fourth embodiment of the present invention.

As is depicted in Fig. 13, the electronic device management system 100 includes electronic devices (e.g., an air conditioner 110, a refrigerator 150, an automobile 160, etc.), a communication terminal 120, and a server 140. The communication terminal 120 and each electronic device are interconnected by radio links and data is directly transmitted and received between them. Moreover, a path between the communication terminal 120 and the server 140 may be a radio communication channel or a wired communication channel.

Each electronic device may become the one to be handled (which may be referred to as "the one to be controlled" hereinafter) by a communication terminal 120. In Fig. 13, an air conditioner 110, a refrigerator 150, and an automobile 160 are depicted by way of example. Each electronic device includes a communication unit, as will be described later, and performs radio communication between it and a communication terminal 120.

The communication terminal 120 is a terminal which is provided with a user interface via which its user 102 interacts with the terminal and which accepts operational input and performs output such as display. As the communication terminal 120, a communication terminal such as, e.g., a smartphone is assumed.

The server 140 is a server which manages condition information of an electronic device (one example of an electronic device management server). The server 140 is a computer connected to a network; e.g., a cloud computer is applied.

In the electronic device management system 100, an integrated circuit 111 having a communication function, embedded in each of the air conditioner 110, refrigerator 150, and automobile 160, intermittently transmits a radio signal including identifying information (first identifying information). This radio signal is received by a communication terminal 120 existing within a range of propagation distance of a radio signal transmitted by an integrated circuit 111 embedded in each of these electronic devices. Then, the communication terminal 120 transmits the first identifying information included in the received radio signal and identifying information (second identifying information) retained by the communication terminal 120 itself to the server 140. The server 140 judges whether or not the electronic device with the first identifying information is the one to be handled by the communication terminal 120, depending on the first identifying information and the second identifying information received from the communication terminal 120 and, depending on a result of the judgment, provides necessary information for processing in the communication terminal 120 to handle an electronic device to the communication terminal 120.

As the electronic device management system 100 pertaining to the forth embodiment, descriptions are provided below, taking an instance where the one to be handled by the communication terminal 120 is the air conditioner 110.

### [An instance where there is a match between the ID of an electronic device which outputs a beacon signal and the ID of an electronic device which is the one to be controlled]

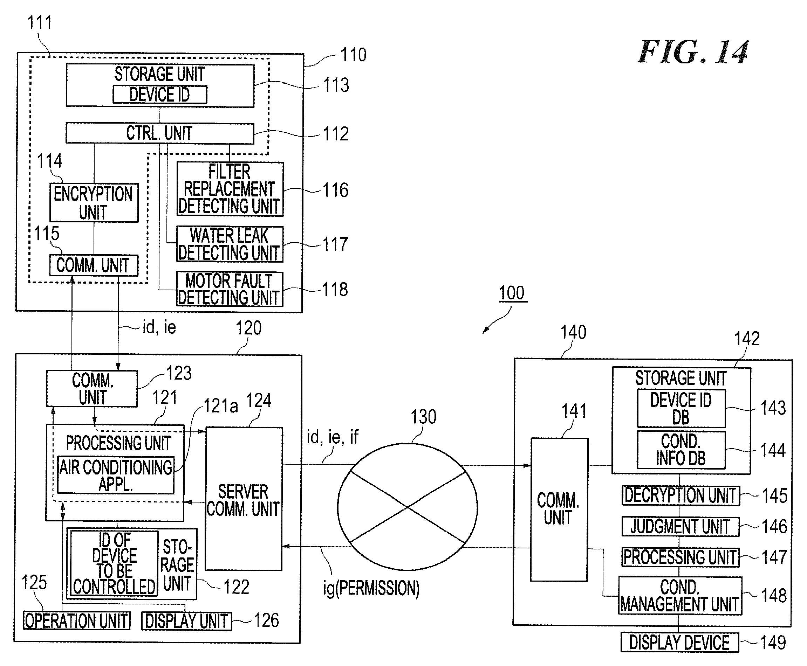

Fig. 14 is a diagram depicting an example of configuration of each device in the electronic device management system 100.

On the air conditioner 110 (one example of an electronic device), communication terminal 120, and server 140 which constitute the electronic device management system 100, a processing procedure for providing information to a communication terminal is performed by program execution by a computer and by cooperation of functional blocks which will be described later.

The electronic device management system 100 includes the air conditioner 110, communication terminal 120, and server 140. The communication terminal 120 and server 140 communicate with each other over a network 130 such as Internet. Fig. 14 is an example in an instance where there is a match between the electronic device ID (Identifier) of the air conditioner 110 and the electronic device ID (the ID of the device to be controlled) of the one to be controlled (air conditioner 110). An electronic device ID is an identifier (first identifying information) unique to each electronic device.

### (Example of configuration of the air conditioner)

The air conditioner 110 includes a control unit 112, a storage unit 113, an encryption unit 114, a communication unit 115, a filter replacement detecting unit 116, a water leak detecting unit 117, and a motor fault detecting unit 118. The control unit 112, storage unit 113, encryption unit 114, and communication unit 115 are implemented as the integrated circuit 111.

The control unit 112 controls operation of all internal parts of the air conditioner 110. This control unit 112 is configured, for example, by a Central Processing Unit (CPU). The control unit 112 receives a result of detection made by any of the filter replacement detecting unit 116, water leak detecting unit 117, and motor fault detecting unit 118 as condition information ie indicating a condition of the air conditioner 110. The control unit 112 sends electronic device ID id stored in the storage unit 113 and condition information ie indicating a condition of the air conditioner 110 to the encryption unit 114.

The storage unit 113 (one example of a first storage unit) is configured by a storage medium such as, e.g., ROM (Read Only Memory), RAM (Random Access Memory), etc. In this storage unit 113, programs to be executed by the control unit 112, parameters, and various data such as electronic device ID are permanently or temporarily stored. In the storage unit 113, is stored the electronic device ID id of the electronic device (air conditioner 110 in Fig. 14) including this storage unit 113.

The encryption unit 114 encrypts information (data) supplied from the control unit 112 by applying an encryption key under control of the control unit 112 and sends encrypted information to the communication unit 115. Here, it encrypts electronic device ID id and condition information ie respectively and sends encrypted ones to the communication unit 115. Alternatively, it may encrypt an entire radio signal including electronic device ID id and condition information ie.

The communication unit 115 (one example of a transmitting unit) performs transmission and reception to/from a communication terminal 120 under control of the control unit 112. The communication unit 115 transmits a radio signal including electronic device ID id and condition information ie encrypted by the encryption unit 114 to the communication terminal 120 and receives a radio signal including a user's operational instruction (command) from the communication terminal 120. When transmitting, the communication unit 115 generates and intermittently transmits a beacon signal (radio signal) in a broadcast manner.

The communication unit 115 generates, as a beacon signal, e.g., an advertisement signal which is prescribed in the Bluetooth (registered trademark) Low Energy (LE) standard (hereinafter abbreviated to a "BLE standard") and sends the radio signal to an antenna, which is not depicted, according to a procedure complying with the BLE standard. Then, the radio signal is transmitted from the antenna in the vicinity of the air conditioner 110. And now, a scheme of communication between the air conditioner 110 (electronic device) and the communication terminal 120 is not limited to the BLE standard; a beacon signal may be generated, utilizing short range radio communication such as, e.g., Wi-Fi (registered trademark).

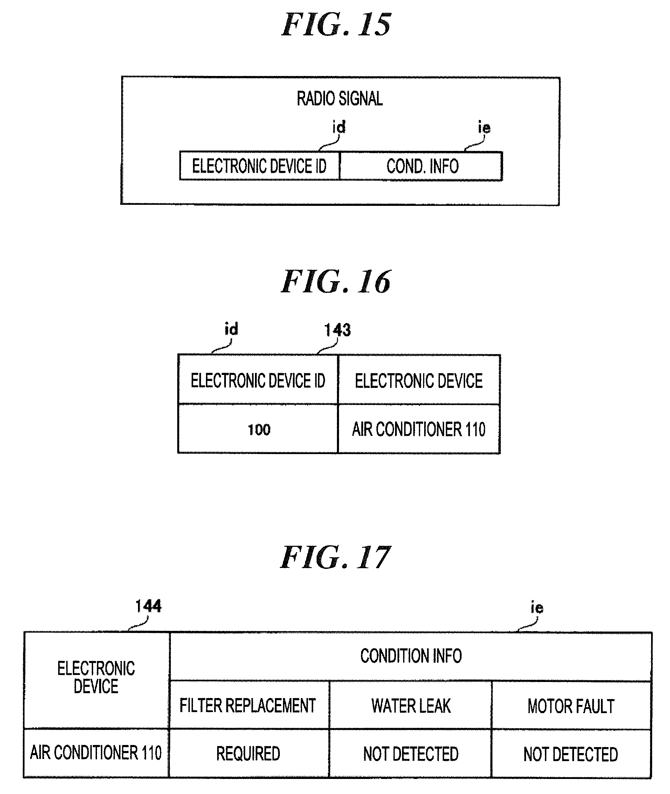

Fig. 15 depicts a data structure of a radio signal which is output from the air conditioner 110.

For example, in a payload (a data body part) of a packet constituting a radio signal, electronic device ID id to identify the air conditioner 110 and condition information ie indicating a condition of the air conditioner 110 are encapsulated.

The filter replacement detecting unit 116 detects whether or not it is required to replace a filter provided inside the air conditioner 110 and sends a result of the detection to the control unit 112. The filter replacement detecting unit 116 judges whether or not replacement is required, for example, from a degree to which the filter gets dusty or clogs.

The water leak detecting unit 117 detects whether or not water leak occurs inside the air conditioner 110 and sends a result of the detection to the control unit 112.

The motor fault detecting unit 118 detects a fault occurring in a motor provided inside the air conditioner 110 and sends a result of the detection to the control unit 112. The motor fault detecting unit 118 judges whether or not a fault occurs from, for example, motor sound, vibration, heat, or the like.

Each of the filter replacement detecting unit 116, water leak detecting unit 117, and motor fault detecting unit 118 is one example of a condition information acquiring unit. Each detecting unit detects that the air conditioner 110 (as to any of the items of filter replacement, water leak, and motor fault) has come into a predefined condition and outputs condition information indicating that the electronic device is in a predefined condition. Each detecting unit is mounted on a main circuit board which is not depicted. On the main circuit board, main circuits having intrinsic functions as the air conditioner 110 are mounted. The air conditioner 110 is configured such that it can transmit data (result of detection) generated in the main circuit board to the communication terminal 120 via the integrated circuit 111 and it can also receive data (operating signal) from the communication terminal 120. And now, it may be arranged such that the integrated circuit 111 is mounted on the main circuit board which is not depicted.

The control unit 112 receives a result of detection made by each detecting unit and acquires condition information indicating that the air conditioner 110 (as to any of the items of filter replacement, water leak, and motor fault) is in a predefined condition. Then, control unit 112 sends this condition information to the encryption unit 114.

On the other hand, if the air conditioner 110 is not in a predefined condition, condition information is not transmitted from the air conditioner 110 to the communication terminal 120 and only the electronic device ID may be transmitted. And now, when the air conditioner 110 has been initialized, e.g., upon the replacement of a power supply unit (e.g., a button battery) which is not depicted, condition information may be transmitted to the communication terminal 120.

### (Example of configuration of the communication terminal)

The communication terminal 120 includes a processing unit 121, a storage unit 122, a communication unit 123, a server communication unit 124, an operation unit 125, and a display unit 126.

The processing unit 121 controls all internal parts of the communication terminal 120 according to a program, parameters, and other data that it has read out from the storage unit 122. The processing unit 121 is configured, for example, by a Central Processing Unit (CPU). The processing unit 121 receives a radio signal including encrypted electronic device ID id and condition information ie received from the air conditioner 110. The processing unit 121 does not recognize these pieces of information included in the received radio signal, because it does not have a decryption key corresponding to an encryption key. Then, the processing unit 121 transmits the electronic device ID id and condition information ie included in the radio signal to the server 140 over the network 130. In this case, at the communication terminal 120, encrypted electronic device ID id and condition information ie are not decrypted and, thus, a user who uses the communication terminal 120 shall not see these pieces of information and no burden is imposed on the user. A malicious person is unable to analyze the electronic device ID id and condition information ie.

In the communication terminal 120, an operational application for operating an electronic device is installed in advance. In the example of Fig. 14, an air conditioning application 121a for operating the air conditioner 110 is installed in the communication terminal 120. In a state that the air conditioning application 121a is running, the user gives an instruction, e.g., to change a set temperature, to the air conditioner 110 by operating the operation unit 125 and utilizing the air conditioning application 121a. Then, the processing unit 121 detects that an operational instruction to the air conditioner 110 has been given from the user and transmits, to the server 140, the ID of the electronic device to be controlled (the ID of the device to be controlled, second identifying information) by the air conditioning application 121a stored in the storage unit 122. Alternatively, as a facility of the air conditioning application 121a, an operational menu may be prepared, allowing the user to directly request transmission of the ID of the device to be controlled by the air conditioning application 121a. In the present embodiment, the ID of the device to be controlled, stored in the storage unit 122, is electronic device ID of the air conditioner 110.

Moreover, the processing unit 121 has a function of processing necessary information for processing in the communication terminal 120, which is received from the server 140. The processing unit 121 performs various control to display text, images, etc. on the display unit 126, based on an operating signal input from the operation unit 125 and various information which the server communication unit 124 received via an antenna which is not depicted.

And now, even if plaintext data of electronic device ID id and condition information ie has been transmitted from the air conditioner 110, there is no function (application) for interpreting plaintext data of electronic device ID id and condition information ie. Therefore, whether electronic device ID id and condition information ie transmitted from the air conditioner 110 are encrypted data or plaintext data, the communication terminal 120 does not recognize these pieces of information.

The storage unit 122 (one example of a second storage unit) is configured by a storage medium such as, e.g., ROM, RAM, etc. In this storage unit 122, programs for controlling all internal parts of the communication terminal 120, parameters, and various data such as information received from the server 140 are permanently or temporarily stored. In this storage unit 122, stored is the ID of the device to be controlled if associated with the operational application running on the communication terminal 120.

The communication unit 123 (one example of a receiving unit) performs control of communication complying with the above-mentioned BLE standard or Wi-Fi standard under control of the processing unit 121. The communication unit 123 demodulates a radio signal received from the air conditioner 110 via an antenna which is not depicted and sends it to the processing unit 121. Moreover, the communication unit 123 transmits a radio signal including a user's operational instruction (command) to the air conditioner 110.

The server communication unit 124 performs control to carry out base-station communication which is performed between the communication terminal and a base-station antenna which is not depicted under control of the processing unit 121. The server communication unit 124 also controls packet communication for mutual data communication with an access point or a router, which is not depicted, for, e.g., Wi-Fi (registered trademark). Moreover, the server communication unit 124 performs processing to transmit modulated data by radio from the antenna which is not depicted, and to demodulate data received by radio through the antenna and pass it to the processing unit 121. And now, communication between the communication terminal 120 and the server 140 is performed using a Secure Sockets Layer/Transport Layer Security (SSL/TLS) protocol or the like; thus, a secure connection is assured.

The operation unit 125 outputs an operating signal to the processing unit 121, according to input by user operation performed with buttons and switches, which are not depicted, arranged on the communication terminal 120 and, in addition, by touching the screen.

The display unit 126 displays information received from the server 140 under control of the processing unit 121. The display unit 126 is configured by, e.g. a liquid crystal display panel. And now, in the communication terminal 120, the operation unit 125 and the display unit 126 are formed as a single touch panel display in which a touch screen is placed on a display screen.

### (Example of configuration of the server)

The server 140 includes a communication unit 141, a storage unit 142, a decryption unit 145, a judgment unit 146, a processing unit 147, and a condition management unit 148.

The communication unit 141 (one example of a terminal communication unit) performs control to carry out base-station communication which is performed between the server and a base station which is not depicted. The communication unit 141 also controls packet communication for mutual data communication with an access point or a router, which is not depicted, for, e.g., Wi-Fi (registered trademark). Moreover, the communication unit 141 performs processing to modulate data requested by an instruction and transmit it by radio communication from an antenna which is not depicted, and to demodulate data received by radio communication through the antenna and pass it to the storage unit 142.

The storage unit 142 (one example of a third storage unit) is configured by a storage medium such as, e.g., ROM, RAM, etc. In this storage unit 142, programs for controlling all internal parts of the server 140, parameters, and various data such as electronic device ID id, condition information ie, and ID of the device to be controlled if received from the communication terminal 120 are permanently or temporarily stored. Here, an electronic device ID database (described as "device ID DB" in Fig. 14) 143 and a condition information database (described as "cond. info DB" in Fig. 14) 144 are stored in the storage unit 142. The storage unit 142 updates the condition information database 144, each time the communication unit 141 receives electronic device ID id and condition information ie from the communication terminal 120, that is, each time the air conditioner 110 transmits a radio signal including condition information ie to the communication terminal 120.

Fig. 16 depicts one example of the electronic device ID database 143.

In the electronic device ID database 143, stored are an electronic device ID id received from the communication terminal 120 and information of an electronic device associated with the electronic device ID id. In the example of Fig. 16, electronic device ID id "100" and "air conditioner 110" which are associated with each other are stored in the electronic device ID database 143.

Fig. 17 depicts one example of the condition information database 144.

In the condition information database 144, stored are an electronic device ID id received from the communication terminal 120 and condition information ie of the air conditioner 110 associated with the electronic device ID id. In this example, as condition information ie regarding the air conditioner 110 whose electronic device ID id is "100", "filter replacement, required", "water leak, not detected", and "motor fault, not detected" are stored. For example, in an instance where the electronic device has come into a predefined condition with regard to an item, a flag is set on in the item's column (filter replacement in this example) and a flag is set off in the columns of other items (water leak and motor fault).

And now, in the condition information database 144, instead of information indicating that the electronic device has come into a predefined condition, a condition at the current instant with regard to each item may be recorded. For example, information indicating that it comes near the time for filter replacement (such as the number of days until the replacement) may be recorded. If an arrangement is made such that such information is recorded in the condition information database 144 and transmitted to the communication terminal 120, an observer of the server 140 and the user of the communication terminal can exactly know a condition of the air conditioner 110 at the current instant with regard to each item.

The decryption unit 145 decrypts encrypted electronic device ID id and condition information ie, respectively, included in a radio signal received by the communication unit 141 and sends decrypted ones to the judgment unit 146. It also sends received data of the ID of the device to be controlled if, as is, to the judgment unit 146. And now, if an entire radio signal transmitted from the air conditioner 110 is encrypted, the decryption unit 145 decrypts entire data including electronic device ID id and condition information ie received by communication unit 141. And now, the decryption unit 145 may be placed just following the communication unit 141, for example, placed between the communication unit 141 and the storage unit 142.

The judgment unit 146 judges whether or not the electronic device ID id is of the one to be handled by the communication terminal 120, based on the electronic device ID id and the ID of the device to be controlled if received by the communication unit, and sends a result of the judgment to the processing unit 147. For example, the judgment unit 146 compares the ID of the device to be controlled if with an electronic device ID in the electronic device ID database 143 and, if both IDs match, judges that the electronic device ID id is of the one to be handled by the communication terminal 120.

The processing unit 147 controls all internal parts of the server 140 according to a program, parameters, and other data that it has read out from the storage unit 142. The processing unit 147 is configured, for example, by a Central Processing Unit (CPU). Depending on the result of judgment made by the judgment unit 146, the processing unit 147 performs processing to provide, through the communication unit 141, necessary information ig for processing in the communication terminal 120 to the communication terminal 120. Information ig to provide is, for example, the result of judgment as to whether or not the electronic device ID id is of the one to be handled by the communication terminal 120 and information associated with the electronic device ID id. Information associated with the electronic device ID id is, such as information (e.g. commodity information) which is specified by the electronic device ID id. In this case, a commodity information database which is not depicted is stored in the storage unit 142 of the server 140.

In the commodity information database, the electronic device ID id of the air conditioner 110 received from the communication terminal 120 and commodity information associated with the electronic device ID id are accumulated. Commodity information is, for example, the URL (Uniform Resource Locator) of a commodity site which is specified by the electronic device ID id. As information associated with the electronic device ID id, the URL of a commodity site is read out by the processing unit 147 from the commodity information database and transmitted to the communication terminal 120. And now, information that is provided on a commodity site includes, by way of example, commodity information on a commodity (name, description, image, price, etc. of commodity), information on a store that sells the commodity, or the like. In the following, in a case where commodity information on a commodity and other information on the commodity are termed collectively, they are referred to as commodity information on the commodity or the like. Name, description, price, etc. of commodity are commodity information in a narrow sense, whereas a URL for accessing a commodity site is commodity information in a broad sense.

When a URL transmitted from the server 140 to the communication terminal 120 is displayed on the display unit 126, the user holding the mobile terminal 120 clicks on this URL. This clicking causes the communication terminal 120 to start downloading from a commodity site, which is identified by the URL and is built on a Web server which the terminal accessed over the network 130. Then, the communication terminal 120 displays downloaded commodity information on the commodity or the like on the display unit 126. Since this commodity site involves information on many commodities in addition to the commodity information on the commodity in which the user took interest, it is possible to invoke the willingness of the user to buy. And now, although an example was described in which the commodity site was built on an arbitrary Web server connected to the network 130, the commodity site may, of course, be built on the server 140.

The condition management unit 148 manages the condition information ie of the air conditioner 110 received from the communication terminal 120. That is, the condition management unit 148 checks the condition information database 144 and manages the condition information of the air conditioner 110. For example, each time the condition information database 144 is updated, the condition management unit 148 checks condition information in the condition information database 144 and performs required processing such as reporting that the air conditioner 110 has come into a predefined condition with regard to any of the items, if so.

A display device 149 is connected to the condition management unit 148 of the server 140 via an interface which is not depicted. The display device 149 is configured by, e.g. a liquid crystal display.

### [Processing procedure for providing information to a communication terminal]

Then, descriptions are provided about a procedure for providing information to a communication terminal 120 by the electronic device management system 100.

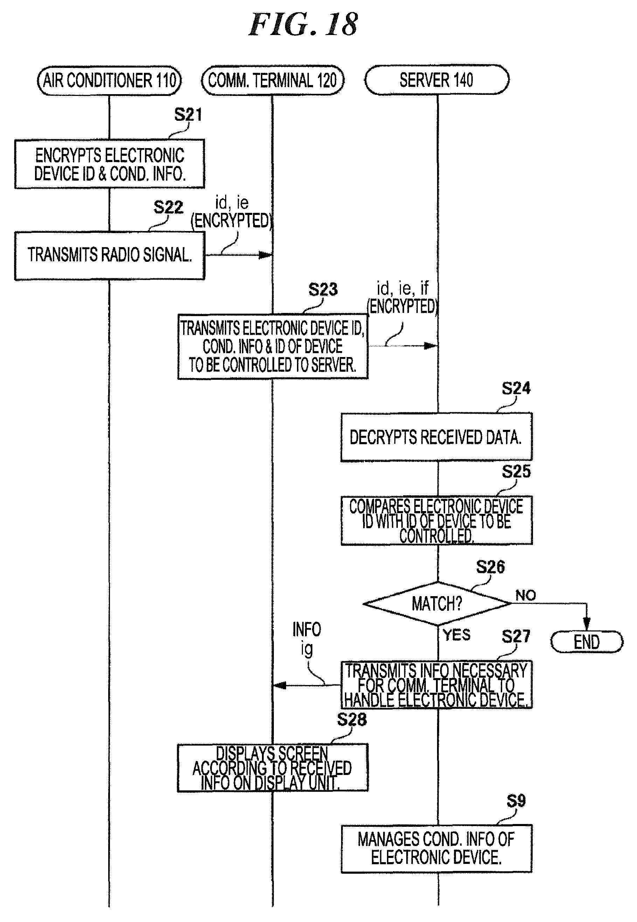

Fig. 18 is a sequence diagram illustrating a procedure for providing information to a communication terminal 120 by the electronic device management system 100.

First, at the air conditioner 110, the control unit 112 reads out the electronic device ID from the storage unit 113, acquires a result of detection (condition information) made by the filter replacement detecting unit 116, the water leak detecting unit 117 and the motor fault detecting unit 118, respectively, and sends the ID and condition information to the encryption unit 114. Next, the encryption unit 114 encrypts data of the electronic device ID and condition information and sends encrypted ones to the communication unit 115 (step S21).

Next, the communication unit 115 transmits a radio signal including the encrypted electronic device ID id and condition information ie of the air conditioner 110 to the communication terminal 120 under control of the control unit 112 (step S22).

Next, at the communication terminal 120, the communication unit 123 receives the radio signal from the air conditioner 110 under control of the processing unit 121. Then, the processing unit 121 extracts the encrypted data of electronic device ID id and condition information ie from the received radio signal and transmits, through the server communication unit 124, the encrypted electronic device ID id and condition information ie to the server via the network 130 (step S23). At this time, the communication terminal 120 does not recognize the contents (data contents) of the radio signal. The processing unit 121 also transmits, through the server communication unit 124, the ID of the device to be controlled if associated with the air conditioning application 121a, which has been stored in the storage unit, to the server 140 (step S23).

Next, the server 140 receives, through the communication unit 141, data including the encrypted electronic device ID id and condition information ie from the communication terminal 120. The server 140 also receives, through the communication unit 141, the ID of the device to be controlled if associated with the air conditioning application 121a. Then, the decryption unit 145 decrypts each data received from the communication unit 141 and sends it to the judgment unit 146 (step S24).

Next, the judgment unit 146 compares the electronic device ID id with the ID of the device to be controlled if, received by the communication unit 141, and judges whether or not the electronic device ID id is of the one to be handled by the communication terminal through the use of the air conditioning application 121a (step S25).

Here, if there is a match between the electronic device ID id and the ID of the device to be controlled if, the judgment unit 146 notifies the processing unit 147 of the judgment result (step S26, YES); if there is a mismatch between them, the sequence of steps is terminated (step S26, NO).

Then, the processing unit 147 performs control to transmit necessary information ig for processing in the communication terminal 120 to the communication terminal 120 (step S27). As the necessary information ig for processing in the communication terminal 120, for instance, a notification of permission for handling the air conditioner 110 by the communication terminal 120 is transmitted (Fig. 14). Upon receiving the permission notification for handling the air conditioner 110, the processing unit 121 of the communication terminal 120 performs processing to display, for instance, the permission notification transmitted from the server 140 on the display unit 126 (step S28). By receiving the permission notification, the processing unit 121 becomes enabled to transmit to the air conditioner 110 a radio signal including a user's operational instruction (command), using the air conditioning application 121a. Upon receiving the radio signal including an operational instruction transmitted from the communication terminal 120, the control unit 112 of the air conditioner 110 sends data including the operational instruction to the main circuit board which is not depicted and causes the air conditioner 110 to operate according to the operational instruction.

Moreover, as the necessary information ig for processing in the communication terminal 120, for instance, information (commodity information or the like) associated with the electronic device ID id may be transmitted to the communication terminal 120. Received information associated with the electronic device ID id is a URL for accessing a commodity site which provides commodity information, for example. At the communication terminal 120, the processing unit 121 performs processing to display the URL transmitted from the server 140 on the display unit 126 (step S28). When the user holding the communication terminal 120 clicks on the URL by operating the operation unit 125, the communication terminal 120 accesses over the network the commodity site identified by the URL. Then, the communication terminal 120 starts downloading from the accessed commodity site. Then, the terminal displays the downloaded commodity information on the commodity on the display unit 126.

Meanwhile, at the server 140, the condition management unit 148 performs processing to store the condition information ie of the air conditioner 110 received from the communication terminal 120, together with the electronic device ID id, into the condition information database 144. Then, the condition management unit 148 manages the condition information of the air conditioner 110, based on the contents of the condition information database 144 (step S29). For instance, if, in the condition management unit 148, there is information such as "filter replacement is required" (see Fig. 17) that should be notified, then that information is reported to the communication terminal 120.

### [An instance where there is a mismatch between the ID of an electronic device which outputs a beacon signal and the ID of an electronic device which is the one to be controlled]

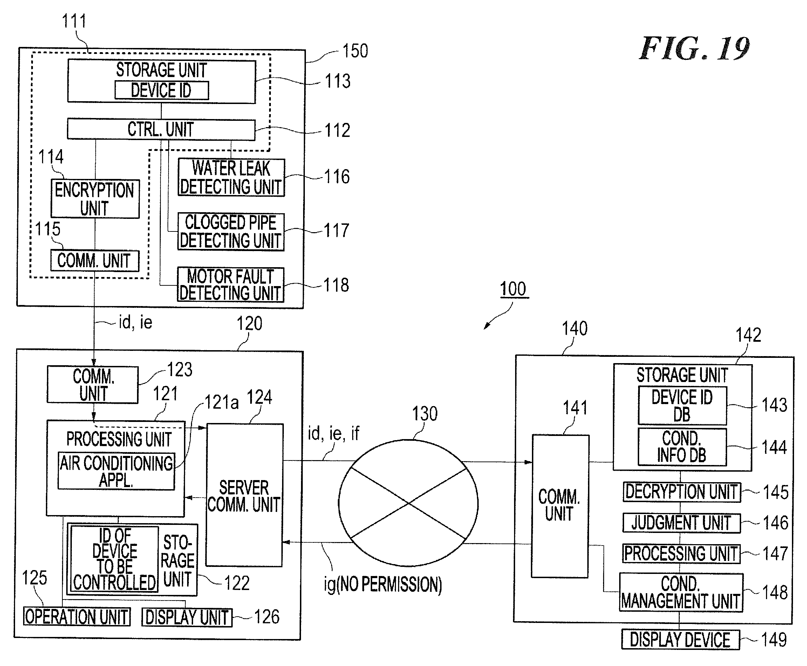

Fig. 19 is an example in an instance where there is a mismatch between the electronic device ID of a refrigerator 150 and the ID of an electronic device (air conditioner 110) to be controlled (the ID of the device to be controlled). Descriptions are provided below about an electronic device management system 100 depicted in Fig. 19, focusing on difference from the electronic device management system 100 in Fig. 14.

In Fig. 19, the transmission source of a radio signal (beacon signal) that a communication terminal 120 receives is a refrigerator 150, whereas the device to be controlled by the communication terminal 120 is an air conditioner 110 (see Fig. 14). In the example of Fig. 19, the refrigerator 150 is present near the communication terminal 120, whereas an air conditioning application 121a for operating the air conditioner 110 is installed in the communication terminal 120 and runs.

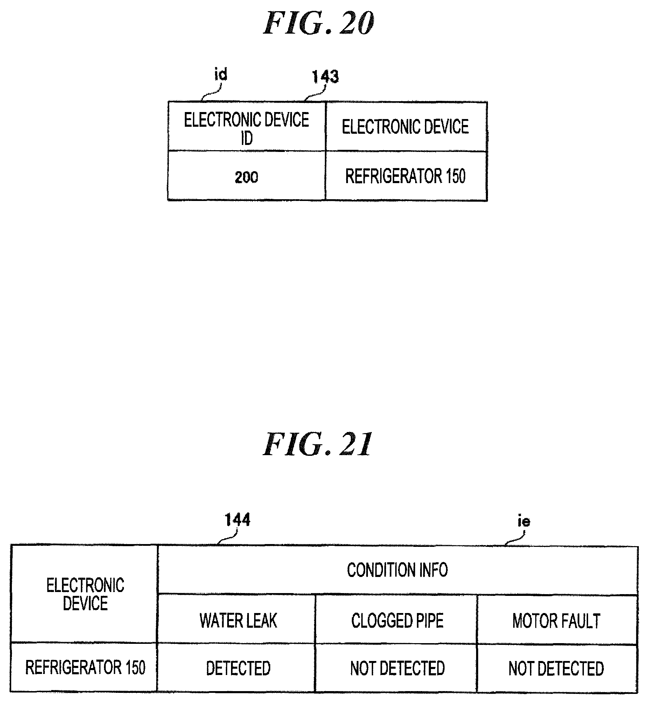

In this case, as is depicted in Fig. 20, electronic device ID id "200" associated with "refrigerator 150" is stored in the electronic device ID database 143.

Moreover, as is depicted in Fig. 21, condition information of the refrigerator 150 whose electronic device ID id is "200" is stored in the condition information database 144. As the condition information ie regarding the refrigerator 150, "water leak, detected", "clogged pipe, not detected", and "motor fault, not detected" are stored.

When the procedure for providing information to a communication terminal 120 (see Fig. 18) is applied to the electronic device management system 100 depicted in Fig. 19, it is judged at step S26 that there is a mismatch between the electronic device ID id (ID, 200 of the refrigerator 150) and the ID of the device to be controlled if (ID, 100 of the air conditioner 110). While, in the description for Fig. 18, the sequence of steps is terminated if there is mismatch between the electronic device ID id and the ID of the device to be controlled if, as information, the judgment result, i.e., a notification of no permission for handling the refrigerator 150 by the communication terminal 120 may be transmitted. The processing unit 121 of the communication terminal 120 receives the no permission notification for handling the refrigerator 150 and performs processing to display the no permission notification transmitted from the server 140 on the display unit 126. In this case, since there is a mismatch between the electronic device ID id and the ID of the device to be controlled if, the user can understand that the user specified a wrong ID as the ID of the device to be controlled. And now, the condition information ie of the refrigerator 150 is accumulated in the condition information database 144 of the server 140.

In the fourth embodiment described above, electronic device ID id and condition information ie included in a radio signal transmitted from an electronic device to a communication terminal 120 are transmitted, as is, to the server 140 through the communication terminal 120. The communication terminal 120 also transmits the ID of the device to be controlled if to the server 140. The server 140 accumulates received condition information ie of the electronic device. Moreover, the server 140 judges whether or not the electronic device ID id is of the one to be handled by the communication terminal 120, based on the electronic device ID id and the ID of the device to be controlled if received from the communication terminal 120. Then, the server 140 provides necessary information ig for processing in the communication terminal 120 to the communication terminal 120, depending on the judgment result.

After transmission through the communication terminal 120 in this manner, condition information ie of an electronic device is retained on an external server 140 and, thus, the communication terminal 120 does not need to have additional parts and perform additional processing which are required heretofore. Therefore, it is possible to manage the condition information ie of an electronic device easily without imposing a burden on the communication terminal 120 and the user who uses the communication terminal 120. Here, if the electronic device ID id is of the one to be handled by the communication terminal 120, necessary information ig for processing in the communication terminal 120 (e.g., permission for handling the electronic device, commodity information, condition information, etc.) is transmitted from the server 140 to the communication terminal 120, thereby enabling the communication terminal 120 to receive a service regarding the electronic device that is the one to be handled by the communication terminal 120.

Conversely, if the electronic device ID id is not of the one to be handled by the communication terminal 120, information ig that is irrelevant to the communication terminal 120 is not transmitted from the server 140 to the communication terminal 120 and, thus, it is impossible for the communication terminal 120 to handle an electronic device that is not of the one to be handled by the terminal and to view irrelevant information. Therefore, the security of electronic devices is maintained.

Moreover, the server 140 can also manage condition information ie of other electronic devices than an electronic device to be handled by a communication terminal 120 in addition to condition information ie indicating a condition of the electronic device to be handled by the communication terminal 120. Moreover, only be accessing information on the server 140, the vendors or the like of electronic devices can know maintenance information and the user's usage conditions of the electronic devices without being contacted from a user.

In other words, according to the fourth embodiment, a communication terminal can receive provision of a service regarding only an electronic device which is the one to be handled by the communication terminal. Moreover, the server can also manage condition information of other electronic devices than an electronic device to be handled by a communication terminal in addition to condition information indicating a condition of the electronic device to be handled by the communication terminal.

### <6. Example of Modification>

In the foregoing fourth embodiment, the first identifying information was exemplified by the electronic device ID of the air conditioner 110 or the refrigerator 150 and the second identifying information was exemplified by the electronic device ID of an electronic device to be handled (controlled) by a communication terminal 120 (the ID of the device to be controlled). However, the first identifying information may be information that can identify an electronic device which communicates with a communication terminal 120 and the second identifying information may be information that can identify an electronic device to be handled by a communication terminal 120. That is, in addition to the electronic device ID database 143 presented in Fig. 16, those that will be illustrated below are conceivable.

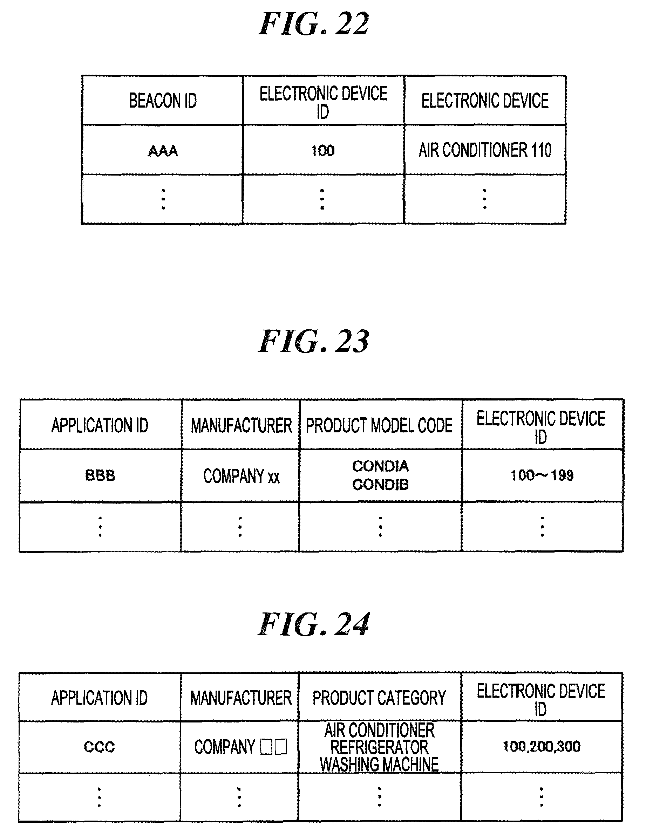

Fig. 22 depicts one example of an electronic device ID database.

For example, the first identifying information may be a beacon ID to identify an integrated circuit (beacon device) which outputs a radio signal (beacon signal) instead of an electronic device ID. An electronic device ID database in which a beacon ID is associated with an electronic device ID, as depicted in Fig. 22, is stored in the storage unit 142 of the server 140. By referring to this database, the judgment unit 146 of the server 140 can identify an electronic device ID from a beacon ID transmitted from a communication terminal 120 and compare the electronic device ID with the second identifying information. In the example of Fig. 22, beacon ID "AAA" is associated with the electronic device ID "100" of the air conditioner 110.

Moreover, the ID of an operational application (hereinafter referred to as an "application ID") may be used for the second identifying information. In this case, an application ID is stored in the storage unit 122 of a communication terminal 120. Here, let us suppose that one operational application is associated with plural electronic devices in the same product category. Fig. 23 depicts one example of an electronic device ID database in which an operational application ID is associated with electronic device IDs which can be controlled using the operational application. By referring to a database like this, it can be checked whether or not an electronic device ID transmitted from an electronic device properly matches with an operational application (application ID) running on a communication terminal 120. In the example of Fig. 23, application ID "BBB" is associated with a manufacturer "company xx", product model codes "COMDIA", "CONDIB" of air conditioners, and electronic device IDs "100" to "199" of air conditioners.

Moreover, one operational application may be associated with plural electronic devices in plural product categories. Fig. 24 depicts one example of an electronic device ID database in which an operational application ID is associated with electronic device IDs in plural product categories which can be controlled using the operational application. By referring to a database like this, it can be checked whether or not an electronic device ID transmitted from an electronic device properly matches with an operational application (application ID), which is compatible with plural product categories, running on a communication terminal 120, as is the case for Fig. 23. In the example of Fig. 24, application ID "CCC" is associated with a manufacturer "company □□", product categories "air conditioner", "refrigerator", and "washing machine", and electronic device IDs "100", "200", and "300".

Furthermore, a user may search for an operational application by specifying, as the second information, e.g., a manufacturer, a product category, a product model code, etc. which are to be controlled. For instance, if the database in Fig. 24 is used, by specifying a manufacturer and a product category, an application ID associated with them and an electronic device ID which can be controlled are identified. As noted above, the first and second identifying information can take various forms and associating an electronic device ID with the ID of a device to be controlled (and an application ID) can be implemented using various databases.

And now, while, in the forgoing embodiments, a configuration was illustrated in which an integrated circuit 111 is incorporated in electric products such as an air conditioner 110 and a refrigerator 150 or an automobile 160, electronic devices in which the integrated circuit is incorporated are not limited to these electric products and automobile. As the electronic devices, a variety of electronic devices is assumed, including healthcare equipment such as a weight meter and a body composition scale, household equipment such as a lighting system, peripherals such as headphones, or the like. Moreover, a sensor for detecting a condition of any object, such as a door opening/closing sensor which outputs a result of detecting door opening/closing (as condition information) or a counter which counts the number of times that a sensing output has been supplied from a sensor and outputs a count value as information indicating a condition of an object are also included in the electronic devices. Furthermore, a memory which stores condition information indicating a condition of an electric product or the like is also included in the electronic devices.

While an example was presented in which a smartphone is assumed as one example of a communication terminal in the forgoing first to fourth embodiments and examples of modifications, various mobile terminals, such as a feature phone, pager, portable music player, and wristwatch can be assumed as communication terminals. Moreover, in the fourth embodiment and the example of its modification, a stationary communication terminal which can communicate with an electronic device by radio may be used instead of a portable communication terminal.

And now, the present invention is not limited to the foregoing embodiments and, of course, can take forms of other application and modification examples without departing from the gist of the present invention set forth in the claims.

For example, the foregoing embodiments are those in which device and system configurations were described in detail and concretely to explain the present invention clearly and the invention is not necessarily limited to those including all components described. Moreover, a subset of the components of an embodiment can be replaced by components of another embodiment. Furthermore, to the components of an embodiment, components of another embodiment can be added. Moreover, for a subset of the components of each embodiment, other components can be added to the subset or the subset can be removed and replaced by other components.

Moreover, control lines and information lines which are considered as necessary for explanation are depicted and all control lines and information lines involved in a product are not necessarily depicted. Actually, almost all components may be considered to be interconnected.

Furthermore, in the present specification, processing steps which describe the steps in temporal sequence include, of course, steps to be executed in time series according to the described sequence and, also, steps that are executed in parallel or separately (e.g., parallel processing or processing by object), which are not necessarily executed in time series.

### Reference Signs List

1, 1A, 1B, 50, 60 ... Beacon device,
2... Smartphone,
10, 10A, 10B ... Beacon device management system,
11... Control unit,
11a ... Condition information acquiring unit,
12... Storage unit,
11a ... Condition information acquiring unit,
13 ... Beacon transmitting unit,
14... Power supply unit,
15 ... Remaining battery power detecting unit,
16... Sensor,
17... Counter,
18 ... Encryption unit,
21... Control unit,
21a... Information processing unit,
23 ... Beacon receiving unit,
24 ... Server communication unit,
40, 40B ... Server,
41... Communication unit,
42 ... Storage unit,
42a... Commodity information database,
42b ... Condition information database,
43 ... Control unit,
43a... Condition management unit
49... Decryption unit,
ia... Beacon ID,
ib... Condition information,
ic... Information associated with beacon ID,
100 ... Electronic device management system,
110... Air conditioner,
111... Integrated circuit,
112... Control unit,
113 ... Storage unit,
115... Communication unit,
116 ... Filter replacement detecting unit,
117 ... Water leak detecting unit,
118 ... Motor fault detecting unit,
120 ... Communication terminal,
121... Processing unit,
121a ... Air conditioning application,
122 ... Storage unit,
123... Communication unit,
124 ... Server communication unit,
140... Server,
141... Communication unit,
142 ... Storage unit,
143 ... Electronic device ID information database,
144 ... Condition information database,
146... Judgment unit,
147... Processing unit,
148 ... Condition management unit,
150... Refrigerator,
id ... Electronic device ID,
ie... Condition information,
if... ID of the device to be controlled,
ig... Information necessary for the communication terminal to handle an electronic device.

## Claims

1. An electronic device management system comprising:
an electronic device having a radio communication function;
a communication terminal capable of radio communication with the electronic device; and
a server capable of communicating with the communication terminal,
the electronic device including:
a first storage unit which stores first identifying information;
a condition information acquiring unit which acquires condition information indicating a condition of the electronic device; and
a transmitting unit which transmits a radio signal including the condition information and the first identifying information,
the communication terminal including:
a receiving unit which receives the radio signal transmitted from the electronic device; and
a server communication unit which transmits, to the server, the condition information and the first identifying information included in the radio signal received by the receiving unit, and
the server including:
a terminal communication unit which receives the condition information and the first identifying information transmitted from the communication terminal, and transmits, to the communication terminal, necessary information for processing in the communication terminal depending on the received first identifying information; and
a condition management unit which manages the condition information received by the terminal communication unit.

2. The electronic device management system according to claim 1, wherein the condition information acquiring unit detects that the electronic device has come into a predefined condition and acquires the condition information indicating that the electronic device is in the predefined condition.

3. The electronic device management system according to claim 1, wherein the electronic device is driven by a battery, and
the condition information acquiring unit acquires the condition information including information relevant to remaining power of the battery.

4. The electronic device management system according to claim 1, wherein the electronic device further includes an input unit which accepts input by user action onto the electronic device,
the condition information acquiring unit acquires the condition information including the number of times that the input has occurred by the user action, and the transmitting unit transmits the radio signal in response to the user action.

5. The electronic device management system according to claim 1, wherein the communication terminal further includes a second storage unit which stores second identifying information,
the server further includes a judgment unit which judges whether or not the first identifying information is of the electronic device to be handled by the communication terminal, based on the first identifying information and the second identifying information,
the server communication unit transmits, to the server, the second identifying information together with the condition information and the first identifying information, and
the terminal communication unit receives the condition information, the first identifying information and the second identifying information transmitted from the communication terminal, and transmits, to the communication terminal, the necessary information for processing in the communication terminal depending on a result of judgment made by the judgment unit.

6. The electronic device management system according to claim 5, wherein if the judgment unit has judged that the first identifying information is of the electronic device to be handled by the communication terminal, the terminal communication unit transmits, to the communication terminal, the necessary information for processing in the communication terminal.

7. The electronic device management system according to claim 5, wherein the terminal communication unit transmits, to the communication terminal, the result of judgment made by the judgment unit as the necessary information for processing in the communication terminal.

8. The electronic device management system according to claim 1, wherein the server further includes a third storage unit which stores information associated with the first identifying information, and
the terminal communication unit transmits, to the communication terminal, the information associated with the first identifying information as the necessary information for processing in the communication terminal.

9. The electronic device management system according to claim 1, wherein the electronic device further includes an encryption unit which encrypts the condition information and the first identifying information,
the server further includes a decryption unit which decrypts the encrypted condition information and the encrypted first identifying information,
the transmitting unit transmits the radio signal including encrypted data encrypted by the encryption unit,
the server communication unit transmits, to the server, the encrypted data included in the radio signal,
the terminal communication unit receives the encrypted data transmitted from the communication terminal, and transmits, to the communication terminal, the necessary information for processing in the communication terminal depending on the first identifying information decrypted by the decryption unit, and the condition management unit manages the condition information decrypted by the decryption unit.

10. The electronic device management system according to claim 1, wherein the radio signal is an advertisement signal that is prescribed in a Bluetooth standard.

11. An electronic device management server capable of communicating with a communication terminal which receives a radio signal transmitted from an electronic device, and transmits condition information indicating a condition of the electronic device and identifying information to identify the electronic device, included in the radio signal, the electronic device management server comprising:
a terminal communication unit which receives the condition information and the identifying information transmitted from the communication terminal, and transmits, to the communication terminal, necessary information for processing in the communication terminal depending on the received identifying information; and
a condition management unit which manages the condition information received by the terminal communication unit.

12. An electronic device management method for use in an electronic device management system including an electronic device having a radio communication function, a communication terminal capable of radio communication with the electronic device, and a server capable of communicating with the communication terminal, the electronic device management method comprising:
a step in which the electronic device transmits a radio signal including condition information indicating a condition of the electronic device and identifying information to identify the electronic device;
a step in which the communication terminal receives the radio signal transmitted from the electronic device;
a step in which the communication terminal transmits, to the server, the condition information and the identifying information included in the received radio signal;
a step in which the server receives the condition information and the identifying information transmitted from the communication terminal;
a step in which the server transmits, to the communication terminal, necessary information for processing in the communication terminal depending on the received identifying information; and
a step in which the server manages the received condition information.
